Europäisches Patentamt

European Patent Office

Office européen des brevets

(19)

(11) **EP 0 716 392 B1**

(12) **EUROPEAN PATENT SPECIFICATION**

(45) Date of publication and mention
of the grant of the patent:
**20.10.1999 Bulletin 1999/42**

(51) Int Cl.⁶: **G06K 11/20**

(21) Application number: **95304123.3**

(22) Date of filing: **14.06.1995**

(54) **Communication between data processing apparatus and peripheral device thereof**

Kommunikation zwischen Datenverarbeitungsgerät und dessen Randgerät

Communication entre un système de traitement de données et son appareil périphérique

(84) Designated Contracting States:
**DE ES FR GB IT**

(30) Priority: **12.10.1994 JP 24658094**
**12.10.1994 JP 24658194**

(43) Date of publication of application:
**12.06.1996 Bulletin 1996/24**

(73) Proprietor: **SEGA ENTERPRISES, LTD.**
**Tokyo 144 (JP)**

(72) Inventors:
• **Koizumi, Masahiro**
**Ohta-ku, Tokyo 144 (JP)**

• **Niizuma, Naoki**
**Ohta-ku, Tokyo 144 (JP)**
• **Kawase, Yasuhisa**
**Ohta-ku, Tokyo 144 (JP)**
• **Ikebe, Hajime**
**Tama-shi, Tokyo 206 (JP)**

(74) Representative: **Palmer, Roger et al**
**PAGE, WHITE & FARRER**
**54 Doughty Street**
**London WC1N 2LS (GB)**

(56) References cited:
**WO-A-88/09573**     **WO-A-94/16774**

## Description

The present invention relates to an improvement in communication between a data processing apparatus and a peripheral device to be connected to the data processing apparatus, and more specifically, to a system for identifying communication modes of the peripheral devices connected to a game apparatus and connector configurations suitable to the peripheral devices with various types of communication modes.

An image processing system is known as a system which has a display such as a television set, (hereinafter, referred to as a "monitor"), on which images are time-dependently displayed. As is widely known for home use, a game apparatus is one representative of such image processing systems.

The game apparatus comprises a processing unit executing game programs and generating video and audio signals. To the apparatus are connected various types of peripheral devices (frequently, referred to as mere "peripherals") such as manipulating switching assemblies called joy pad, controller, or key board. The processing unit mainly performs not only a predetermined image processing therein but also a variety of processings including control of the peripheral devices. The peripheral devices are used, for example, for inputting necessary information from an operator into the processing unit and for displaying image data such as graphic and character data supplied from the processing unit. The peripheral devices thus typically include an operator controller and a monitor having a screen and speaker.

When the processing unit to which the monitor and operator controller are connected is activated by a player or an operator, the monitor is able to display images on its screen and to produce sound from its speaker, depending on instructions of a given game software sent from the processing unit. The player can enjoy the game with the game apparatus.

The game apparatus is normally required to be able to carry out various games. This means that there is much possibility that various types of peripheral devices are connected to the processing unit.

Various interfaces are arranged between the processing unit and the peripheral devices in aid of communication therebetween. Further, because communication modes are often varied depending on the peripheral device, the processing unit is required to obtain information (peripheral identification data) representing the type of a connected peripheral device. For this requirement, it is proposed that the type of a connected peripheral device can be identified using logical values acquired through data lines of the peripheral device when the processing unit sends twice the peripheral device a peripheral selection signal of logical values of "1" firstly, and then of "0". Such prior art is desclosed in Japanese patent Laid-open No.2-62618, for example.

However, the above identification method identifies in fact only the type of a connected peripheral device on the basis of logical values acquired though data lines of the device. In other words, this identification method does not give attention to the communication mode of a connected peripheral device. This results in a drawback that, frequently, connected peripheral devices cannot send data to the processing unit and also the processing unit cannot control the peripheral devices with preferable communication modes to those peripheral devices.

An object of certain embodiments of the present invention is to provide a peripheral device having a connector assembly suitable for transmission of control signals and data with a game device.

Still another object of certain embodiments of the present invention is to provide a game device with a system for identifying various types of communication modes of peripheral devices connected to the apparatus.

Still another object of certain embodiments of the present invention is to provide a game device with a system for controlling various types of peripheral devices connected to the apparatus through a connector with an improved pin configuration.

In order to achieve the objects, according to one aspect of the present invention, there is provided a game device for detachable connection with a peripheral device comprising a peripheral port with nine terminal contacts including first and second power supply contacts, a set of four data signal contacts R,L,D and U for receiving data signals from a peripheral device, and three contacts TH,TR and TL for transmitting signals from/to the peripheral device; and means for controlling collection of data signals which are transmitted from the peripheral device in response to a control signal transmitted from the game device, characterized in that the game device comprises processing means which collects a data combination (R,L,D and U) transmitted via the four data signal contacts R,L,D and U from a peripheral device connected thereto in response to a first control signal of TH="1" and TR="1" and a second control signal of TH="0" and TR="1" transmitted by the game device via the contacts TH and TR and which determines the communication mode of the peripheral device based on the following formula:

$$\{(\text{data R in TH} = \text{"1"}) \text{ or } (\text{data L in TH} = \text{"1"})\} \times 8h$$

$$+\{(\text{data D in TH} = \text{"1"}) \text{ or } (\text{data U in TH} = \text{"1"})\} \times 4h$$

$$+\{(\text{data R in TH} = \text{"0"}) \text{ or } (\text{data L in TH} = \text{"0"})\} \times 2h$$

$$+\{(\text{data D in TH} = "0") \text{ or } (\text{data U in TH} = "0")\} \times 1h$$

wherein "1" and "0" correspond to the power source and ground potentials; and the processing means collects data signals indicative of key switches to be manipulated by an operator of said peripheral device via at least one of the four data signal contacts from the peripheral device in accordance with the determined communication mode in response to a third control signal transmitted by the game device via the contacts TH and TR subsequently to the first and second control signals.

According to another aspect of the invention, there is provided a peripheral device for use with a game device, said peripheral device comprising a plurality of switches operable by user, said switches comprising four key switches for "RIGHT", "LEFT", "DOWN" and "UP" and selection switches, a plug connector which in use is detachably connectable to a peripheral port of the game device, the plug connector comprising four data signal contacts "R", "L", "U" and "D" and a plurality of control signal contacts "TH" and "TR", a plurality of terminal contacts and a data generator connected between the plurality of switches and the connector, said peripheral device having a pair of first and second power supply contacts for providing a power source potential and a ground potential, the data generator is arranged, in use, to supply the game device via the four data signal contacts R, L, D, U, with a data signal representing the type of the peripheral device and a communication mode with which the peripheral device is to transmit signals to the game device in response to a first control signal of "TH=1" and "TR=1" and a second control signal of "TH=0" and "TR=1" transmitted by the game device via the control signal contacts "TH" and "TR", so that the game device is able to determine the communication mode for receiving data signals from the peripheral device based on the following formula:

$$\{(\text{data R when TH} = "1") \text{ or } (\text{data L when TH} = "1")\} \times 8h$$

$$+\{(\text{data D when TH} = "1") \text{ or } (\text{data U when TH} = "1")\} \times 4h$$

$$+\{(\text{data R when TH} = "0") \text{ or } (\text{data L when TH} = "0")\} \times 2h$$

$$+\{(\text{data D when TH} = "0") \text{ or } (\text{data U when TH} = "0")\} \times 1h$$

wherein "1" and "0" correspond to the power source and ground potentials and "h" corresponds to a hexadecimal number; and the data generator is arranged in use to supply the game device with data signals indicative of the plurality of switches, via at least one of the four data signal contacts R, L, D and U in response to a third control signal transmitted by the game device via the contacts TH and TR subsequently to the first and second control signals.

Various other aspects of the present invention and preferred features of the present invention are included in the appended claims.

For a better understanding of the present invention and as to how the same may be carried into effect, reference will now be made by way of example to the accompanying drawings in which:

Fig. 1 is a perspective illustration of a game system embodying the present invention;
Fig. 2 is a basic block diagram showing the game system;
Fig. 3 is a block diagram showing the connection between a main CPU and a sub CPU functioning as a system for managing and controlling peripheral devices and showing the block diagram of the sub CPU;
Fig. 4 shows a connector configuration of peripheral ports;
Figs. 5A to 5C are pin configurations of plug connectors employed in compliance with typical communication modes;
Figs. 6A to 6D are functional block diagrams of typical controllers as peripheral devices;
Fig. 7 is a flowchart exemplifying a processing carried out by the sub CPU;
Fig. 8 is a flowchart of an access subroutine to peripheral devices;
Fig. 9 shows a flowchart of an access subroutine for a three-wire handshake type of communication mode;
Fig. 10 shows a flowchart of an access subroutine for a clocked parallel type of communication mode;
Fig. 11 is a flowchart of an access subroutine for a clocked serial type of communication mode;
Fig. 12 represents a timing chart of control signals and data for the three-wire handshake type of communication mode;
Fig. 13 represent a timing chart of control signals and data for the clocked parallel type of communication mode; and
Fig. 14 is a timing, chart of control signals and data for the clocked serial type of communication mode.

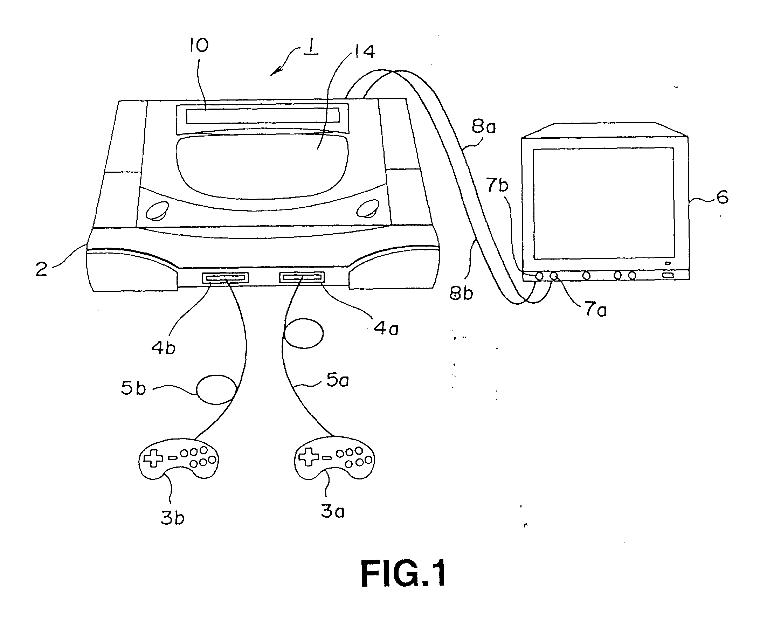

An embodiment of the present invention will now be explained with reference to Figs. 1 to 14.

Fig. 1 shows a perspective view of a game system 1 to which the present invention is applied. The game system 1 comprises a game apparatus 2 functioning as the data processing apparatus for processing game programs and controlling various operations and control switch assemblies or controllers 3a and 3b as an example of peripheral devices to the game apparatus. As for the controllers, such control keys disclosed in U. S. patent application S.N. 08/245,446 (Publication No 5,498,843) may be used. The apparatus 2 is provided with connector ports 4a and 4b for connecting peripheral devices. Each of the connector ports 4a and 4b has a socket or a socket connector 4as(4bs) to which a plug or a plug connector 4ap(4bp) can be connected and disconnected.

The plugs 4ap and 4bp are connected to the controllers 3a and 3b through cables 5a and 5b, respectively. The controllers 3a and 3b are electrically and functionally connected to internal circuits of the game apparatus 2 via the cables 5a and 5b when the plugs 4ap and 4bp are inserted into the sockets 4as and 4bs.

Each of the plugs 4ap and 4bp has a configuration of plug pins which ensures transmission of a communication mode employed for the controllers 3a and 3b to the game apparatus 2. Further, the apparatus 2 comprises a video output terminal and an audio output terminal not shown.

The video output terminal is connected to a video input terminal 7a of a monitor 6, such a television set, through a cable 8a. Also the audio output terminal is connected to an audio input terminal 7b of the monitor 6 through a cable 8b.

The game apparatus 2 has a CD-ROM drive block 14 positioned at the central portion thereof. The CD-ROM drive block 14 is installed with a CD-ROM drive 9 and an optical pickup to read game program data or audio/video software from CD-ROM discs mounted thereto. The apparatus is further provided with a cartridge port 10 positioned at the rear side of the CD-ROM drive block 9. The cartridge port portion 10 is installed therein with a socket connector to which are connected devices such as a ROM/RAM cassette or an optional adapter for providing additional functions (not shown).

The apparatus 2 carries out a wide variety of information processings and controls such as image processings, audio processings and control of peripheral devices as well as processing of game programs. The controllers 3a and 3b provide the apparatus 2 operating signals. A video and audio signals generated by the apparatus 2 are given to the monitor 6 through the cables 8a and 8b.

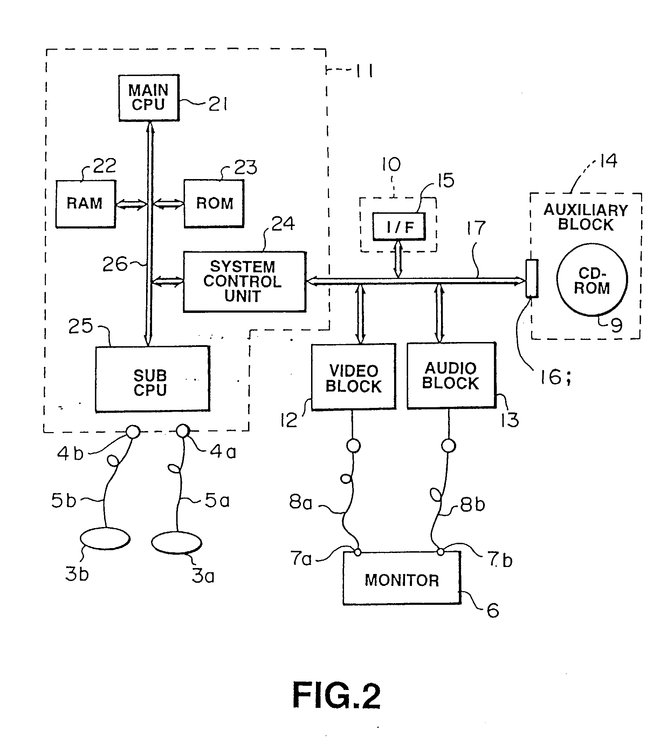

Fig. 2 exemplifies a block diagram of the game apparatus 2. The apparatus 2 shown therein comprises a processing block 11, video block 12, audio block 13, and auxiliary block or CD-ROM drive block 14. The cartridge port 10 includes a cartridge interface (I/F) 15 and the auxiliary block 14 includes a compact disk Interface (I/F) 16.

The processing block 11 comprises a main processing unit (CPU) 21, RAM 22, ROM 23, system control unit 24, and sub CPU 25. The main CPU 21 is functionally connected, via a bus line 26, to the RAM 22, ROM 23, system control unit 24, and sub CPU 25.

Through the bus line 26, system control unit 24 and a bus line 17, the main CPU 21 is functionally connected with the video block 12, audio block 13, cartridge I/F 15, and CD I/F 16. The CD I/F 16 of the auxiliary block 14 is connected with the CD-ROM drive 9.

The main CPU 21 controls the entire processings of the system. In order to enhance control capability, the main CPU 21 consists of 32-bit RISC types high speed CPUs (two CPU chips called SH-2) and provides an improved, high speed calculating operation which may function similarly as a digital signal processor (DSP).

RAM 22 has, for example, a memory capacity of 32 megabits in all, a memory area of 16 megabits of which is assigned to the main CPU 21, for example. The remaining memory area of the RAM 22 is assigned to the video block 12 and audio block 13. ROM 23 stores initial programs or bootstrap programs for the hardware and for the cassette ROM and the CD-ROM.

The system control unit 24 functions as a co-processor to the main CPU 21 so that the unit 24 interfaces 16 bit bus 17 to which the video block 12, audio block 13 and auxiliary block 14 are connected with 32 bit bus 26 to which the main CPU 21 is connected.

When the electric power is on and/or a reset button is pushed down, the sub CPU 25 not only resets the entire system but also carries out data collection from the peripheral devices such as the controllers 3a and 3b to control the peripheral devices. Also the sub CPU 25 can change the clock frequency of the entire system.

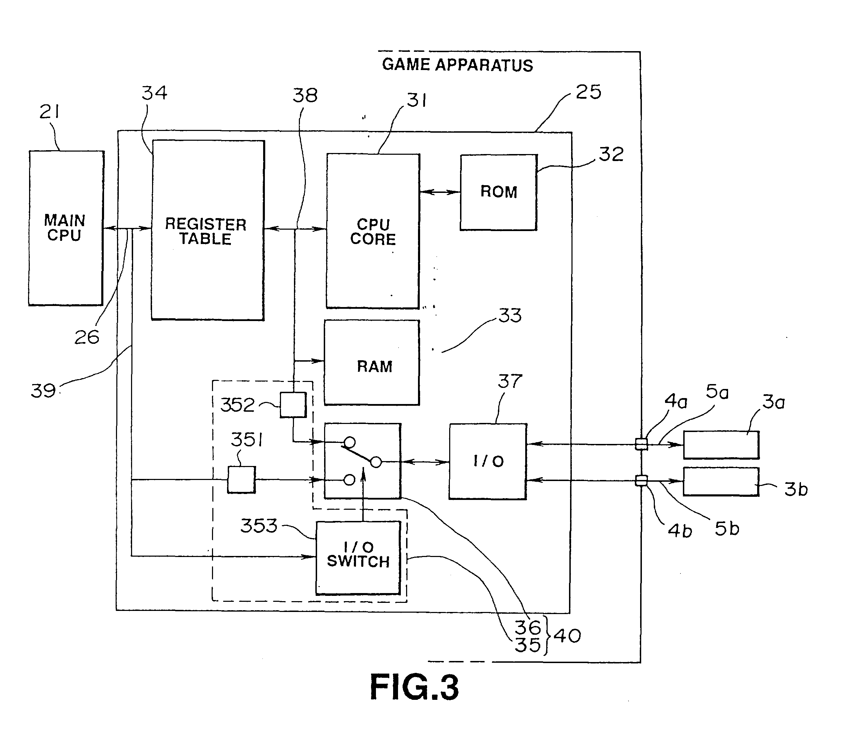

The sub CPU 25 further includes a connection-exchanging means described below. The connection-exchanging means selectively connects the peripheral devices such as the controllers 3a and 3b connected to the connector ports 4a and 4b with either a CPU core 31 (refer to Fig. 3) in the sub CPU 25 or the main CPU 21.

The video block 12 forms video signals on the basis of video control signals given from the main CPU 21 through the system control unit 24 and provides the monitor 6 the video signals through the cable 8a. This permits the monitor 6 to display images on its screen. The details of the video block 12 may be referred to WO95/01630 (filed Feb. 24, 1995 in U. S.), WO95/01609 (filed Feb. 27, 1995 in U. S.), WO95/01629 (filed Feb. 27, 1995 in U. S.).

The audio block 13 generates digital audio signals on the basis of audio control signals given from the main CPU 21 through the system control unit 24, converts those digital audio signals into corresponding analog audio signals

4

by a digital/analog (DA) converter incorporated therein, and provides the monitor 6 the converted analog audio signals through the cable 8b. Such processing permits an audio speaker of the monitor 6 to produce sound.

The sub CPU 25 will be explained with reference to Fig. 3. Fig. 3 represents in block diagram the configuration of the sub CPU 25 which acts as a unit for controlling and managing peripheral devices. As shown in the figure, the sub CPU 25 is coupled with the main CPU 21 by way of the bus line 26. The sub CPU 25 comprises a CPU core 31, ROM 32, RAM 33, register table 34, register group 35, multiplexer 36, and I/O interface 37.

The CPU core 31, for example, may be a 4-bit CPU. The CPU core 31 is coupled with the ROM 32 to receive required programs from the ROM 32. Coupled with the CPU core 31 through a bus line 38 are the RAM 33, register table 34, and the register group 35. Further, the register group 35 is coupled with the I/O interface 37 via the multiplexer 36. The register group 35 and multiplexer 36 compose the connection-exchanging means 40.

The register group 35 may be sub-grouped into a main-CPU register group 351, a sub-CPU register group 352, and an I/O section register 353. The main-CPU register group 351 has two terminals; one is connected with the main CPU 21 through a bus line 39 and the bus line 26, while the other is connected with one of the two exchanging terminals of the multiplexer 36. The sub-CPU register group 352 has also two terminals; one is connected with the CPU core 31 through a bus line 38, while the other is connected with the other of the exchanging terminals of the multiplexer 36.

The multiplexer 36 has a common terminal connected with the I/O interface 37. The interface I/O 37 is connected with the connector ports 4a and 4b. The connector ports 4a and 4b are connected, through cables 5a and 5b, with the controllers 3a and 3b, respectively.

In response to data specified in the I/O section register 353, the multiplexer 36 functionally connects the peripheral devices such as the controllers 3a and 3b selectively to either the CPU core 31 through the register group 352 and bus line 38 or the main CPU 21 through the register group 351 and bus lines 39 and 26.

The CPU core 31 is designed such that, when the CPU core 31 is electrically connected with the peripheral devices via the multiplexer 36, the CPU core 31 communicates with the peripheral devices in the order of "peripheral ID-1", "peripheral ID-2", "data size" and "data", decides a communication mode from those IDs(identification data), and then performs collection, transmission and exchanges etc. of the data.

In this embodiment, the data "peripheral ID-1", which consists of 4-bit data, represents a communication mode in accordance with the type of a peripheral device. The data "peripheral ID-2", which also consists of 4-bit data, is a type of data representing the device model of a peripheral device and consists of a set of data showing a device model focusing on signal types showing whether the signal is, for example, analog or digital. The "data size" represents the total bite number of data from a peripheral device and will be shown by references "DSIZEO to DSiZE3" in figures described below. The "data" represents data, which are supplied from a peripheral device, of the total bite number specified by the "data size". The CPU core 31 reads the data having the above total number at every 4-bit, because the CPU core 31 is a 4-bit processor in this embodiment.

Although the register group 35, multiplexer 36 and I/O interface 37 have two-channel circuits, respectively, this embodiment shows only one-channel circuit for simplified explanation.

Details of sub CPU 25 may be referred to co-pending Japanese patent applications Nos.6-246579.

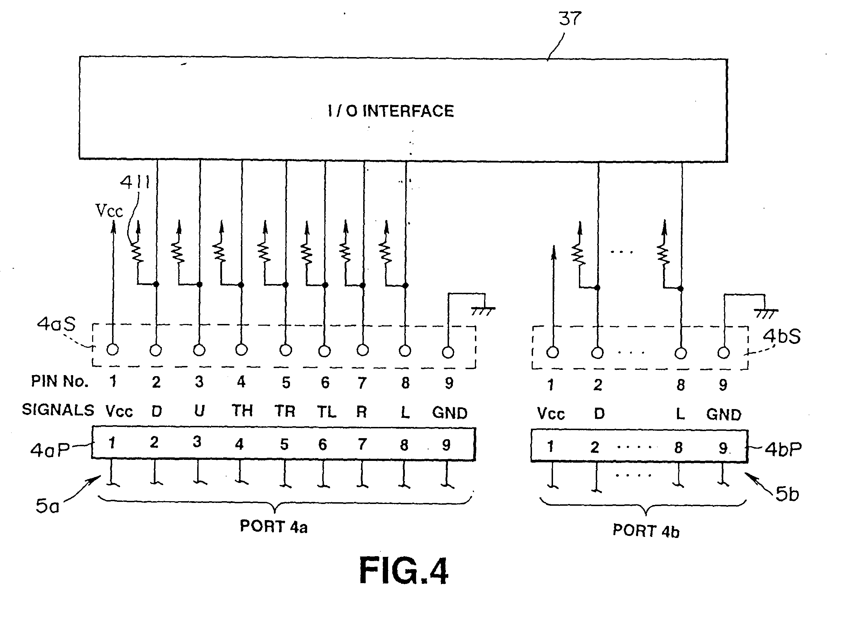

As shown in Fig. 4 the 1/0 interface has two channels connected to peripheral ports 4a and 4b. Each of the peripheral ports 4a and 4b has a set of socket pins 1 through 9. Pins 2 through 8 are connected to I/O interface and assigned to send and receive a set of specific signals. Names and functions of the signals are shown in Table 1.

As shown in Fig. 4, each of plugs 4ap and 4bp which are to be connected to the sockets 4as and 4bs respectively has a set of plug pins 1 through 9 corresponding to the socket pins 1 through 9. The plug 4ap and 4bp are connected to main circuits of peripheral devices via cables 5a and 5b.

Table 1

| Signal Name | Pin No. | Remarks |
|---|---|---|
| TH | 4 | Control signal from game apparatus |
| TR | 5 | Control signal from game apparatus |
| TL | 6 | Control signal to game apparatus(ack) |
| R | 7 | Data signal (third bit) |
| L | 8 | Data signal (second bit) |
| D | 2 | Data signal (first bit) |
| U | 3 | Data signal (0-th bit) |

Table 1  (continued)

| Signal Name | Pin No. | Remarks |
|---|---|---|
| Vcc | 1 | Power Source(+5V) |
| GND | 9 | GND |

Pins nos. 4 to 6 are assigned for control signals. Pin no. 4 is the first control pin and assigned for transmitting a peripheral selection signal TH from the game apparatus 2 to the peripheral device (for example, controllers 3a, 3b). Pin no. 5 is the second control pin and assigned for transmitting a data request signal TR from the game apparatus to the peripheral device. Pin no. 6 is the third control pin and assigned for transmitting a peripheral acknowledgement signal TL from the peripheral device to the game apparatus.

Pins nos. 2, 3, 7 and 8 are assigned for data signals. Pin no. 2 (the first data pin) is assigned for transmitting a bit data D, pin no. 3 (the second data pin) for a bit data U, pin no. 7 (the third data pin) for a bit data R, and pin no. 8 (the fourth data pin) for a bit data L, respectively. The data R is mainly used for data transmission to the game apparatus 2. The input/output directions of data for these signals D, U, R and L can optionally be specified in accordance with the kind of the peripheral device connected to the apparatus 2. The signal R represents the third bit of the data, L the second bit, D the first bit and U the 0-th bit, respectively.

Pins 2 through 8 are connected to an electric power source Vcc by way of resisters 411, respectively, thereby to pull up the voltage levels of the signal lines (pins nos. 2 to 8) to the level of the power source Vcc.

When a peripheral device is not connected to the port 4a (4b) the voltage level on each of pins nos. 2 to 8 is equal to the voltage value of the power source Vcc (i.e. logical value = binary value "1"). Thus, the sub CPU 25 identifies that a peripheral device is not connected to the socket 4as (4bs) when it receives these data of the voltage state "1", for example, for D, U, R and L.

Pins nos. 5 and 6 are mainly assigned for transmitting control signals between the game apparatus and the peripheral devices in the above description. However, pins 5 and 6 may be used for data signal transmission where a peripheral device employs either the clocked parallel communication mode or clocked serial communication mode which will be described below.

Pin no. 1 is assigned to the signal Vcc which represents the power source (voltage:+5V). The pin no. 9 is assigned to the signal GND which represent the ground potential (voltage: zero).

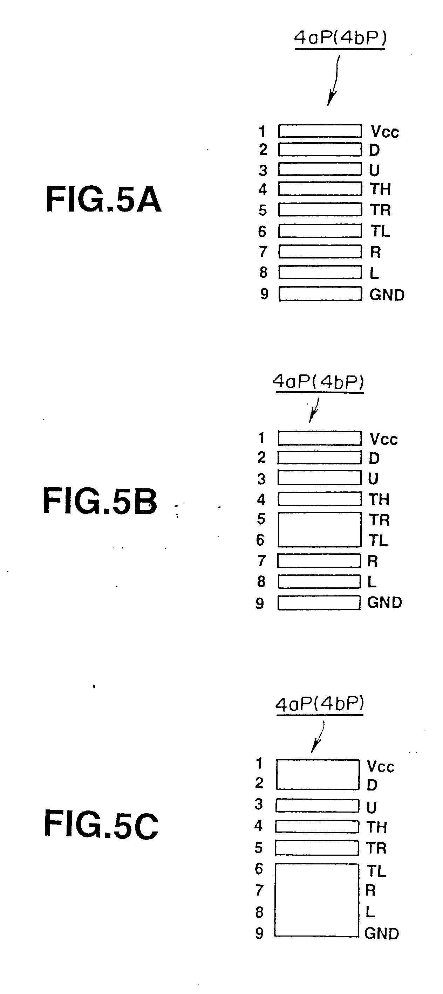

Figs. 5A to 5C explains a variety of pin configurations for plugs 4ap and 4bp which vary depending on communication modes employed by peripheral devices. Fig. 5A shows a pin configuration for standard communication modes including a TH/TR-selection communication mode and a three-wire handshake communication mode, Fig. 5B shows a pin configuration for a clocked parallel communication mode (clock-synchronized-type parallel communication mode), and Fig. 5C shows a pin configuration for a clocked serial communication mode (clock-synchronized-type serial communication mode), respectively. The clocked parallel and serial communication modes correspond to the non-standard type of modes.

These pin configurations are prepared to easily comply with a large number of types of peripheral devices, such as a control PAD, mouse, key board, modem and memory unit, and with different communication modes which may change according to peripheral devices.

Typical communication modes employed by a variety of peripheral devices are, for example, a TH/TR-selection communication mode, a three-wire handshake mode, a clocked parallel mode, and a clocked serial mode. A peripheral device employing tile TH/TR-selection and three-wire handshake communication modes requires all of the socket/plug pins 1 through 9 of the connector port 4a (4b) to be used electrically independently. Accordingly, as shown in Fig. 5A, all the pins 1 through 9 of the plug 4ap (4bp) are not short-circuited to each other.

On the other hand, where a peripheral device employs the clocked parallel communication mode, pin no. 5 assigned for the data request signal TR and pin no. 6 assigned for peripheral acknowledgment signal TL can electrically be short-circuited as shown in Fig. 5B. Further, in case of a peripheral device employing the clocked serial communication mode, the data transmission lines in the connector port 4a (4b) can be reduced to one line in principle, and it is possible to transmit data through the one data line in cooperation with the two peripheral selection line (TH) and data request line (TR). Accordingly, as shown in Fig. 5C, pin no. 2 may be connected to Vcc and pins 6 to 8 may be connected to GND.

As is exemplified above, it is understood that each of the connector ports 4a and 4b have a certain requirement in the number of needed signal lines (i.e., pins), which is determined in accordance with the employed communication mode. The processing apparatus 2 can use logical values on specified signal lines (in other words, specified pins) at the connector ports 4a and 4b to decide communication modes. Namely the apparatus 2 can determine the communication modes according to the logical values on the signal lines (pins).

Thus, in order to identify the employed communication mode, it should be essential to know the numbers of pins required to transmit data and the logical values on each signal line (i.e., each specified pin). In the present embodiment, the pin configurations of the plugs are designed to be able to transmit effectively to the apparatus 2 the logical values required to decide the communication mode employed by a peripheral device. In consequence, the apparatus 2 can quickly decide the employed communication mode.

Where the communication mode of a peripheral device is clocked parallel mode, the pin configuration of each plug 4ap (4bp) of the connectors are shown in Fig. 5B. In this mode, the apparatus 2 transmits to the controllers 3a and 3b a specified logical value ("1" or "0") as the peripheral selection signal TH and given clock signals as the data request signal TR. In response to this, signals of required logical values are then quickly provided through the data lines from the controllers 3a and 3b in synchronization with the clock signals. As shown in Fig. 5B, the pin 5 for the data request signal TR is short-circuited with the pin 6 for the peripheral acknowledgment signal TL in this clocked parallel communication mode, thereby the signals (voltages) on both the plug pins no. 5 and 6 being the same. Accordingly the signal TR transmitted from the apparatus 2 to pin no. 5 is sent back almost simultaneously from pin no. 6 to the apparatus 2 as the signal TL. Thus, the apparatus 2 identifies the clocked parallel mode by sensing signal TL equal to signal TR.

Further, in case of a peripheral device of the clocked serial communication mode, only one signal line (U) is required to transmit data. In addition, only the peripheral selection signal line (TH) and data request signal line (TR) transmitting clock signals are required as control lines. And logical values needed to identify this communication mode may be set as R=L="0", D="1", and U="1". These requirements may be realized by such pin configurations of the plugs 4ap and 4bp as shown in Fig. 5C in which plug-pins which are not used for transmitting data and control signals are connected to fixed potentials (Vcc and GND). For example, pin no. 2 is connected to the power source Vcc and pins nos. 6 to 8 are connected to the ground GND. This plug-pin configuration will make It possible to produce required logical values representing the clocked serial communication mode at the pins of the plugs 4ap and 4bp, thus such logical values being supplied to the apparatus 2.

The short-circuit between the pins in Figs. 5B and 5C may be achieved either by putting a short-circuit wire bridging connecting portions at which the plug pins are connected to the corresponding wires contained in the cable 5a (or 5b) in the plug or by providing a short-circuit pattern on a printed circuit board arranged in the plug 4ap (4bp). This reduces in number wires in the cable 5a (or 5b) connecting the plug 4ap (4bp) to the main circuit of a peripheral device.

The foregoing short-circuit can be achieved within the main circuit of a peripheral device either by putting a short-circuit wire bridging wires of the cable 5a (or 5b) or by forming a specified short-circuit printing pattern on a printed circuit board. Though this short-circuit design cannot reduce the cable 5a (or 5b) in number, the plug can be reduced in size.

Particularly in the case of pin configuration of the plug 4ap (4bp) shown in Fig. 5C assigned to the clocked serial communication mode, the no. 2 pin is short-circuited and electrically connected to the no. 1 pin (signal Vcc; power source pin) and the pins nos. 6 to 8 are all short-circuited and electrically connected to the no. 9 pin (signal GND; ground pin). And accordingly wires in the cable connecting the plug 4ap (or 4bp) with the main circuit of a peripheral device can largely be decreased in number, because only the lines of the data signal U and the control signals TH and TL are required.

On one hand, when the pin configuration of Fig. 5C is effectively realized within a peripheral device, the lines of the cable, independent of signal transmission, are electrically connected to the power source and the ground potential, which leads to reduced noises which may fall onto the lines.

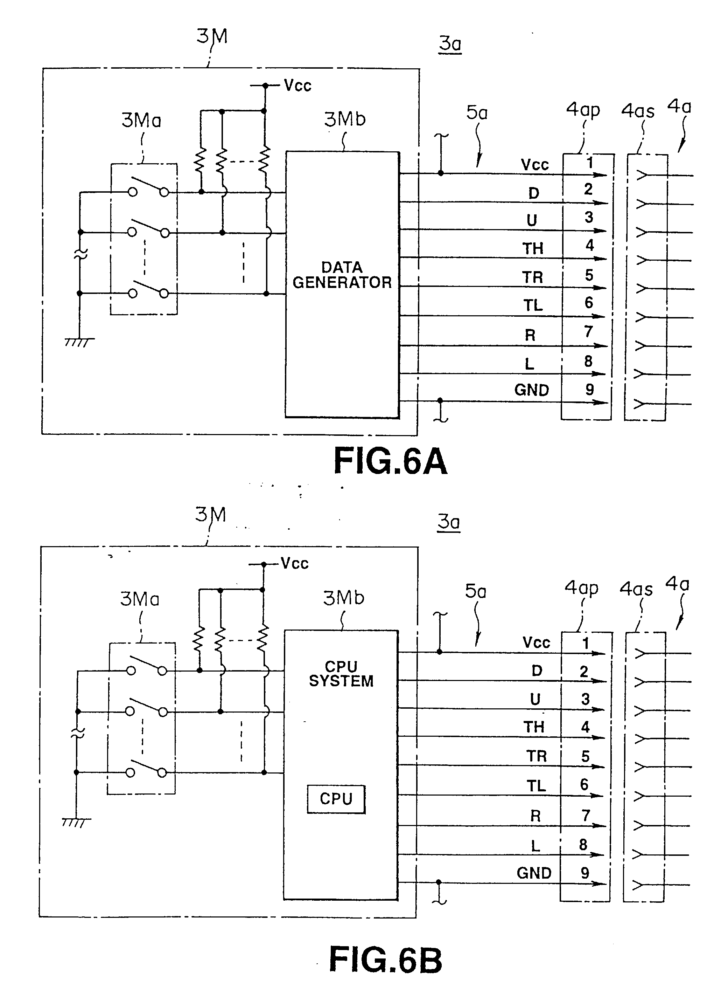

The functional schematic diagram of controllers as representatives of peripheral devices employing the foregoing various communication modes will now be explained with reference to Figs. 6A to 6D which use part of the same reference numerals as ones described above.

Fig. 6A shows a controller 3a employing the TH/TR-selection communication mode. The controller 3a comprises the plug connector 4ap, the cable 5a having nine wires connected to the nine plug pin nos. 1 to 9 of the plug connector 4ap, and a main circuit 3M to which the wires of the cable 5a are connected. The nine plug pin nos. 1 to 9 are electrically independent from each other and individually connected to the nine wires of the cable 5a. The main circuit 3M has an operating portion 3Ma and a data generator 3Mb. The operating portion 3Ma, which is operated by a player, includes keys and/or switches. The data generator 3Mb is formed by circuits such as hardware logic circuits or a CPU system such that a specific group of 4-bit data R, L, D, U including data generated at the operating portion 3Ma are selected from other data groups and supplied through the plug pin nos. 2, 3, 7, 8 in response to bit patterns of both the peripheral selection signal TH and data request signal TR.

Fig. 6B shows a controller 3a employing the three-wire handshake communication mode. The controller 3a comprises the plug connector 4ap, the cable 5a having nine wires connected to the nine plug pin nos. 1 to 9 of the plug connector 4ap, and a main circuit 3M to which the wires of the cable 5a are connected. The nine plug pins 1 to 9 are electrically independent from each other and individually connected to the nine wires of the cable 5a. The main circuit 3M has an operating portion 3Ma and a CPU system 3Mb. The CPU system 3Mb has a CPU and functions as a data generator which is responsive to the operating portion 3Ma. The data generator formed by hardware logic circuits can be adopted as a substitute for the CPU system. The CPU system 3Mb communicates with the game apparatus 2 using the three signals TH, TR, and TL sequentially inputted or outputted through the plug connector 4ap and then supplies 4-bit parallel data R, L, D, U including data generated at the operating portion 3Ma to the game appartus 2 through the plug connector 4ap. When output signals from an operating portion 3Ma are analog quantities, the operating portion 3Ma includes signal processing circuits such as an A/D convertor.

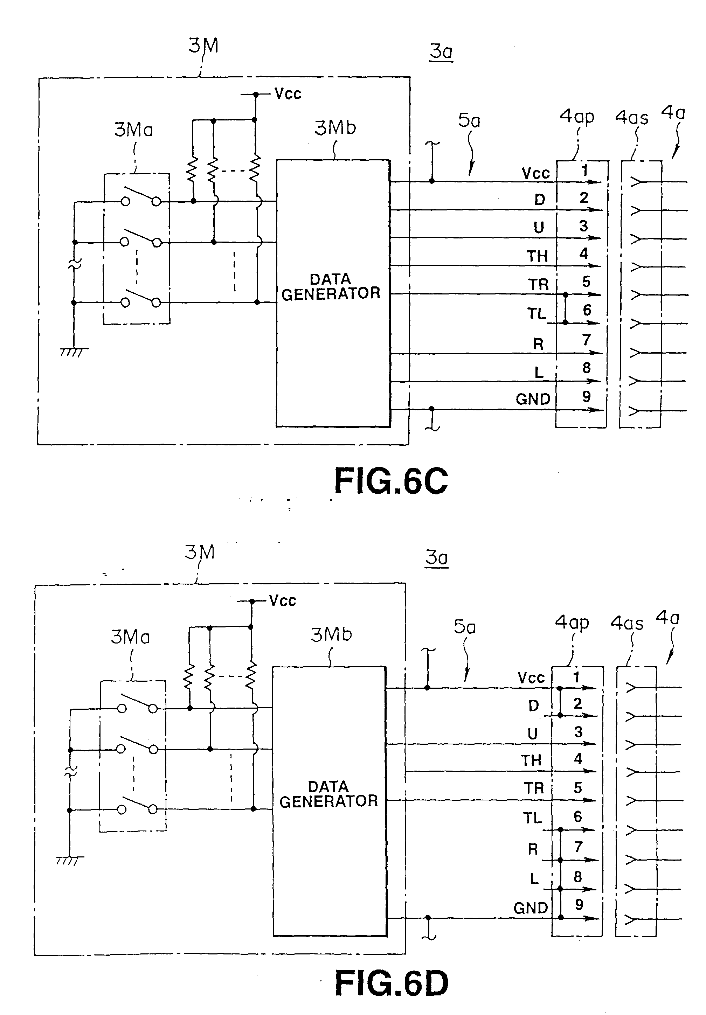

Fig. 6C shows a controller 3a employing the clocked parallel communication mode. The controller 3a also comprises the plug connector 4ap of nine pin nos. 1 to 9, the cable 5a, and a main circuit 3M. Among the nine plug pin nos. 1 to 9, the pins of nos. 5 and 6 are short-circuited at their pin portions to each other and the remaining pins are still electrically independent. The plug pins of Nos. 1 to 5 and 7 to 9 are coupled with the respective wires of the cable 5a. The main circuit 3M has an operating portion 3Ma and a data generator 3Mb which can be constructed using gate array circuits, for example. The main generator 3Mb, through the plug connector 4ap sequentially receives the peripheral selection signal TH and data request signal TR (potentially equal to the peripheral acknowledgement signal TL due to the short circuit) and, almost simultaneously with the reception of the signal TR, supplies to the game apparatus 2 4-bit parallel data including data generated at the operating portion 3Ma. The plug pin configuration of this mode reduces the number of wires of the cable 5a by one, as shown in Fig. 6C. The clocked parallel communication mode permits the game apparatus 2 to communicate with the controller 3a in the same manner as the three-wire handshake mode.

Fig. 6D shows a controller 3a employing the clocked serial communication mode. The controller 3a also comprises the plug connector 4ap of nine pins of nos. 1 to 9, the cable 5a, and a main circuit 3M. Among the nine plug pins of nos. 1 to 9, the pins of nos. 1 and 2 are short-circuited and the pins of nos. 6 to 9 are short-circuited, respectively, at their pin portions to each other and the remaining pins are still electrically independent. The plug pins of nos. 1, 3 to 5, and 9 are coupled with the respective wires of the cable 5a. The main circuit 3M has an operating portion 3Ma and a data generator 3Mb which can be constructed using gate array circuits, for example. The data generator 3Mb, through the plug connector 4ap, sequentially receives the peripheral selection signal TH and data request signal TR and, in response to clock pulse inversion, supplies to the game apparatus 2 serial data including data generated at the operating portion 3Ma. The plug pin configuration of this mode remarkably reduces the number of wires of the cable 5a by four, as shown in Fig. 6D.

In Figs. 6C and 6D, such short-circuit configuration can be achieved in the side of the main circuit 3M.

In the present embodiment, when the plug 4ap (or 4bp) connected to the controller 3a (or 3b) is inserted into the socket 4as (or 4bs) arranged in the apparatus 2, the foregoing plug pin configurations permit the sub CPU 25 to communicate to process in the order of "peripheral ID-1", "peripheral ID-2", "data size", and "data", even though the controller 3a (or 3b) as the peripheral device adopts different communication modes or different device types. Also the foregoing plug pin configuration provides the communication of "peripheral IDs" and "data" in a proper state, although types and/or communication modes of peripheral devices are different.

The operation of the apparatus 2 functionally including the system for identifying communication modes of peripheral devices will now be explained with reference to Figs. 3 to 14 and Table 2 to 6.

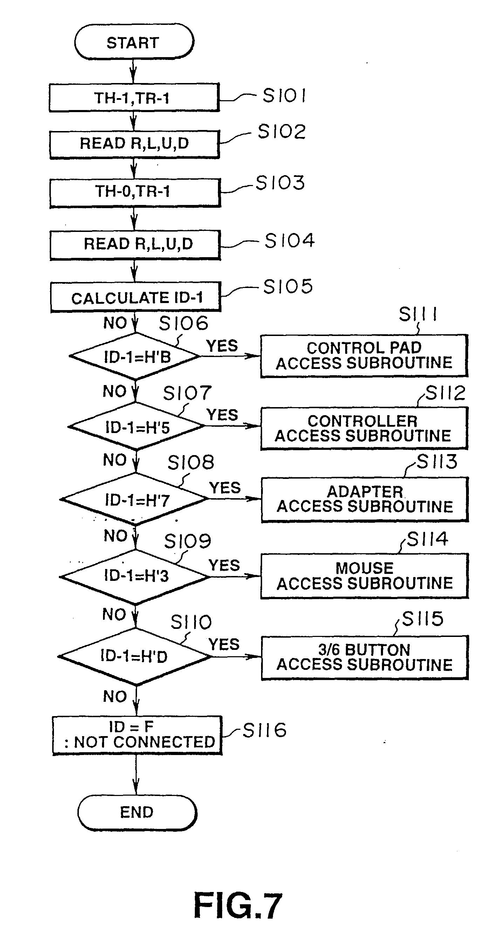

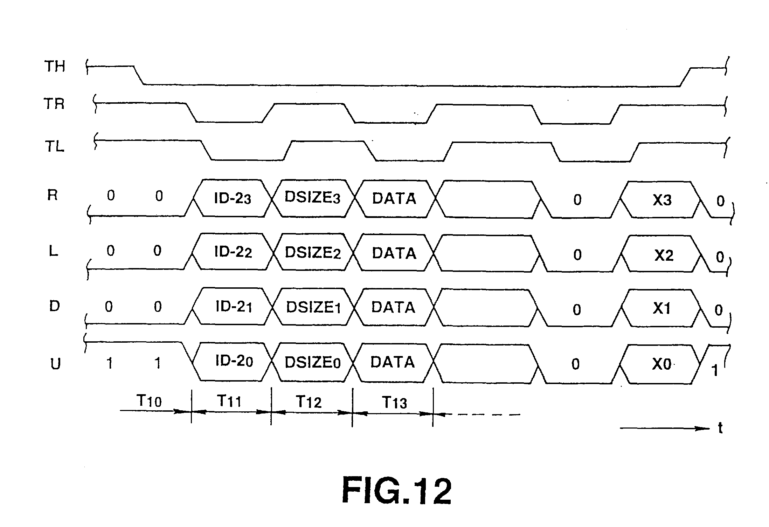

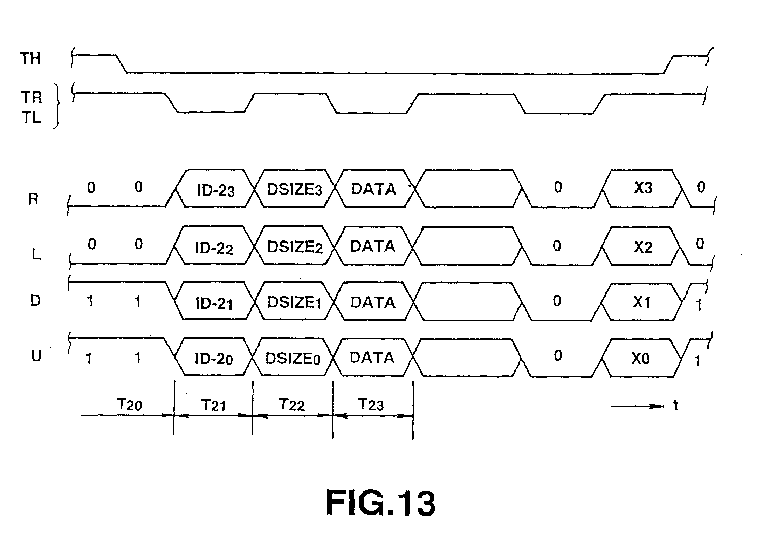

As shown in Fig. 7, after being activated, the sub CPU 25 first outputs the control signals TH="1" and TR="1" (refer to Step S101 in Fig. 7). The CPU core 31 of the sub CPU 25 reads logical values of the data signals R, L, D and U produced on pins 7, 8, 2 and 3 by each of the peripheral devices and stores the read logical values into a predetermined memory area of the RAM 33 (Step S102). The CPU core 31 again outputs the control signals TH="0" and TR="1" (Step S103). In response to this, the CPU core 31 again reads logical values of the data signal R, L, D and U produced by the peripheral devices and stores them into a predetermined memory area of the RAM 33 (Step S104: see the intervals $T_{10}$ in Fig. 12 and $T_{20}$ in Fig. 13).

The CPU core 31 then calculates the "peripheral ID-1" (Step S105). The "peripheral ID-1" can be calculated using the following formula.

$$[ID-1] = \{(\text{data R in TH="1"}) \text{ or } (\text{data L in TH="1"})\} \times 8h$$

$$+ \{(\text{data D in TH="1"}) \text{ or } (\text{data U in TH="1"})\} \times 4h$$

$$+ \{(\text{data R in TH="0"}) \text{ or } (\text{data L in TH="0"})\} \times 2h$$

$$+ \{(\text{data D in TH="0"}) \text{ or } (\text{data U in TH="0"})\} \times 1h$$

, where h represents suffix for hexadecimal number. Using the calculated results of [ID-1], the CPU core 31 identifies the types of peripheral devices (Steps S106 to S110). The following table 2 shows a relation between the types of peripheral devices and the calculated results of [ID-1].

Table 2

| Peripheral Device | ID-1 |
|---|---|
|  | F |
|  | E |
| 3/6 Button | D |
|  | C |
| Control PAD | B |
|  | A |
|  | 9 |
|  | 8 |
| Adaptor | 7 |
|  | 6 |
| Controller (Peripheral #1) | 5 |
|  | 4 |
| Mouse | 3 |
|  | 2 |
|  | 1 |
| Modem | 0 |

In detail, the CPU core 31 first determines whether or not the calculated result [ID-1] is Bh, for instance. When it is determined that the calculated result [ID-1] be Bh (YES at Step S106), it is decided that the peripheral device be a control PAD packed together with the game system. The relation between peripheral devices and values of ID-1 is shown in Table 2. Thus the CPU core 31 performs the processing of a control PAD access subroutine (Step S111). When the calculated result [ID-1] is not Bh (NO at Step S106), the CPU core 31 then determines whether or not the calculated result [ID-1] is 5h, for example (Step S107).

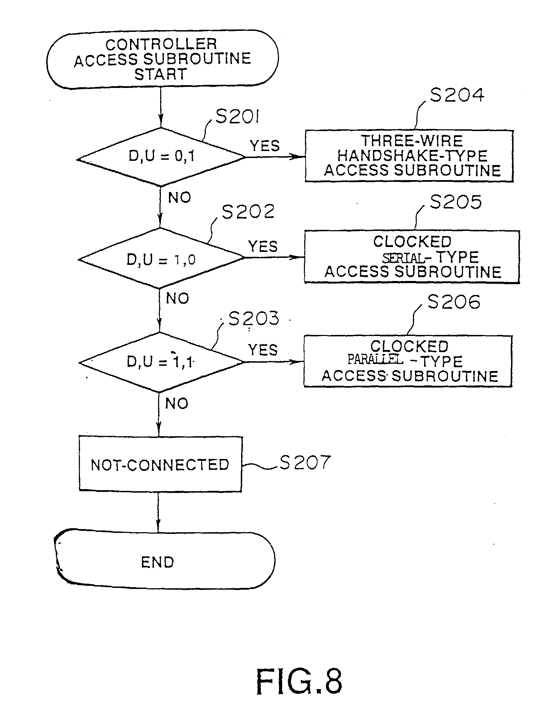

When it is determined that the calculated result [ID-1] be 5h (YES at Step S107, also refer to Table 2), a controller access subroutine is processed (Step S112), which is shown in detail in Fig. 8.

When the calculated result [ID-1] is not 5h (NO at Step S107), the sub CPU 25 proceeds to the determination whether the calculated result [ID-1] is 7h, for example (Step S108). When the determination is YES at Step S108 (i. e., the calculated result [ID-1] = 7h), the sub CPU 25 then performs an adaptor access subroutine (Step S113).

When it is determined that the calculated result [ID-1] be not 7h (NO at Step S108), the sub CPU 25 continues to determine if the above calculated result [ID-1] is 3h or not, for example (Step S109). Where the calculated result [ID-1] is determined to be 3h (YES at Step S109, Table 2), a mouse access subroutine is processed (Step S114).

When the above result [ID-1] is not 3h (NO at Step S109), it Is then determined whether or not the calculated result [ID-1] be Dh (Step S110). Where this determination shows that the calculated result [ID-1] is Dh (YES at Step S110, Table 2), a 3/6 button access subroutine is then performed (Step S115). When the determination is NO at Step 110, the processing is continued to Step S116, where a decision that the peripheral device is not connected is made for the calculated result [ID-1] = Fh and a decision to be unknown is made for values of the [ID-1] other than the above exemplified results (refer to Table 2).

As a representative, the control PAD access subroutine will be described. In this subroutine, an access to the control PAD is carried out under the TH/TR communication mode automatically designated. This communication mode uses 2-bit data consisting of combined two signals of the peripheral selection signal TH and data request signal TL to select a group of data generated in the control PAD. The selected group of data is supplied from the control PAD to the game apparatus. In the present embodiment, the TH/TR-selection communication mode is preferably employed in the control PAD and the 2-bit data can select four patterns for, for example, four-bit data R, L, D and U. The table 3 shows a truth values of this mode, in which the references "RIGHT", "LEFT", "DOWN", "UP", "START", and "TRG-A, B, C, X, Y, Z, L, R" are names of the key portions and switch portions. Data of the peripheral acknowledgment signal TL are ignored in the TH/TR-selection communication mode.

Table 3

| DATA | TH | TR | TL | R | L | D | U |
|---|---|---|---|---|---|---|---|
| | bit6 IPUT | bit5 INPUT | bit4 OUTPUT | bit3 OUTPUT | bit2 OUTPUT | bit1 OUTPUT | bit0 OUTPUT |
| 1st | 1 | 1 | 1 | TRG-L | 1 | 0 | 0 |
| 2nd | 0 | 1 | 1 | RIGHT | LEFT | DOWN | UP |
| 3rd | 1 | 0 | 1 | START | TRG-A | TRG-C | TRG-B |
| 4th | 0 | 0 | 1 | TRG-R | TRG-X | TRG-Y | TRG-Z |

As another representative, the foregoing controller access subroutine shown in Fig. 8 will now be described also with reference to Table 4 which represents the bit patterns of data R, L, D and U corresponding to typical communication modes used by controllers as peripheral devices.

Table 4

| Communication mode | TH=1 | | TR=1 | | TH=0 | | TR=1 | |
|---|---|---|---|---|---|---|---|---|
| | R | L | D | U | R | L | D | U |
| Three-wire handshake | 0 | 0 | 0 | 1 | 0 | 0 | 0 | 1 |
| Clocked serial | 0 | 0 | 1 | 0 | 0 | 0 | 1 | 0 |
| Clocked parallel | 0 | 0 | 1 | 1 | 0 | 0 | 1 | 1 |

In this access subroutine, the CPU core 31 of the sub CPU 25 first determines communication modes by a series of Steps S201 to S203 on the basis of the logical values of the data D and U acquired before. When both the data D is "0" and U is "1" (YES at Step S201), the peripheral device is identified as in the three-wire handshake mode (refer to Table 4), and the processing by the sub CPU 25 proceeds to a three-wire handshake-type access subroutine (Step S204).

When the data D and U are not "0" and "1", respectively (NO at Step S201), the CPU core 31 then determines whether both of the data D and U are "1" and "0", respectively, for example (Step S202). When the determination is YES at Step S202 (i.e., D="1" and U="0", refer to Table 3), the CPU core 31 continues to an access subroutine of the clocked serial communication mode (Step S205).

Furthermore, where the determination is NO at Step S202 (i.e., data D is not "1" and data U is not "0"), the CPU core 31 determines whether or not the data D is "1" and data U is "1" (Step S203). When being determined that D="1" and U="1" (YES at Step S203, refer to Table 4), the CPU core 31 performs an access subroutine of the clocked parallel communication mode (Step S206).

When the CPU core cannot find the positive answers at any of the above determination processes at Steps S201 to S203 (NO at Steps S201 to S203), it is then determined that any peripheral device be not connected to the apparatus 2 (Step S207), and this subroutine is ended up.

Each access subroutine shown at the above Steps S204 to S206 will now be explained in detail.

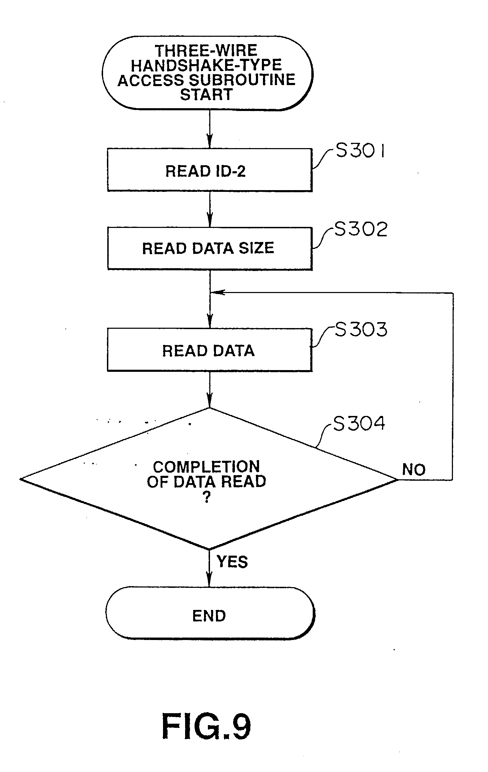

First, the access subroutine of the three-wire handshake communication mode, which is shown in Fig. 9, will be explained using the timing chart of each signal shown in Fig. 12 in which the reference t shows time.

during the interval $T_{11}$ in Fig. 12, the CPU core 31 reads the "peripheral ID-2" (Step S301 in Fig. 9). In other words, the data ID-$2_3$, ID-$2_2$, ID-$2_1$ and ID-$2_0$ of R, L, D and U are taken in by the CPU core 31 during the interval $T_{11}$ and it is determined whether each of those data ID-$2_3$ to ID-$2_0$ corresponds to any of "Oh" to "Fh" (refer to IDs shown in Table 5).

Table 5

| Peripheral Device | ID-2 | Remarks |
|---|---|---|
| Digital device | 0 | Control PAD, joystick etc. |
| Analog device | 1 | Analog joystick etc. |
| Pointing device | 2 | Mouse, tablet etc. |

10

Table 5   (continued)

| Peripheral Device | ID-2 | Remarks |
|---|---|---|
| Keyboard | 3 | Keyboard etc. |
| Multitap | 4 | Multitap etc. |
| | 5 | |
| | 6 | |
| | 7 | |
| | 8 | |
| | 9 | |
| | A | |
| | B | |
| | C | |
| | D | |
| Peripheral #2 | E | ID for conversion |
| | F | for non-connection |

In addition to the reading, the CPU core 31 looks up Table 5 for each value of the read peripheral ID-2. For example, the CPU core 31 determines that the peripheral device be a digital device for "peripheral ID-2" = Oh, an analog device for "peripheral ID-2" = 1h, a pointing device for "peripheral ID-2" = 2h, a key board for "peripheral ID-2" = 3h, and so on.

After such determination, the CPU core 31 reads the data size during the next interval $T_{12}$ (Step S302). Namely, as shown in Fig. 12, data DSIZE0 to DSIZE3 of R, L, D and U are taken in for deciding the data size.

The CPU core 31 then reads the data during the following intervals starting from interval $T_{13}$ in Fig. 12 (Step S303). It is then determined whether the amount of the read data reaches the data size (Step S304). If the determination is NO, the processing returns to Step S303 to read the data again. However, the determination is YES at Step S304 (i.e., the data amount that has been read by then reaches the determined data size), this subroutine is ended up.

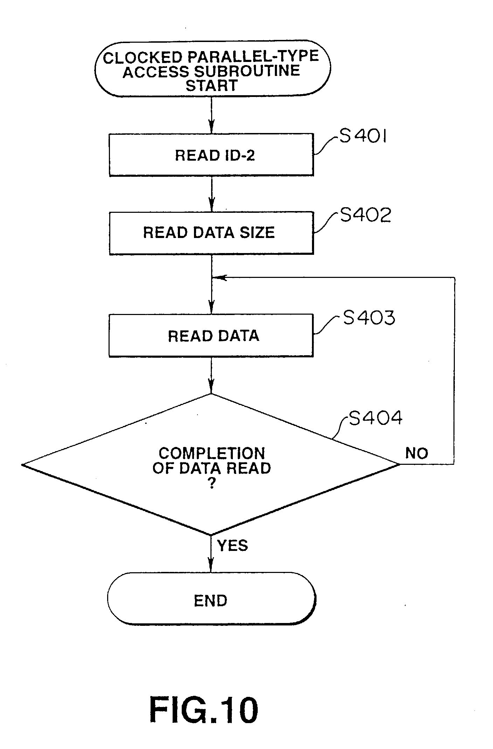

Further, the access subroutine of the clocked parallel communication mode recited in Fig. 8 will now be explained using Figs. 10 and 13.

Fig. 13 shows the timing chart of the clocked parallel communication mode, which is almost the same as that shown in Fig. 12. Only one difference is that both of the signals TR and TL always change at the same timing.

First, the CPU core 31 reads the "peripheral ID-2" during the interval $T_{21}$ in Fig. 13 (Step S401 in Fig. 10).

In detail, the data $ID-2_3$, $ID-2_2$, $ID-2_1$ and $ID-2_0$ of R, L, D and U are taken in by the CPU core 31 during the interval $T_{21}$ and it is determined whether each of the data $ID-2_3$ to $ID-2_0$ corresponds to any of "0h" to "Fh" (refer to IDs shown in Table 5). The CPU core 31 looks up Table 5 for each value of the read peripheral ID-2. For example, the CPU core 31 determines that the peripheral device be a digital device for "peripheral ID-2" = 0h, an analog device for "peripheral ID-2" = 1h, a pointing device for "peripheral ID-2" = 2h, a key board for "peripheral ID-2" = 3h, and so on.

After this, during the next interval $T_{22}$, the CPU core 31 reads the data size by receiving data DSIZE0 to DSIZE3 of R, L, D, U as shown in Fig. 13 (Step S402 in Fig. 10).

The CPU core 31 then reads the data during the following intervals starting from interval $T_{23}$ in Fig. 13 (Step S403). It is then determined whether the amount of the read data reaches the data size (Step S404). If the determination is NO, the processing returns to Step S403 to read the data again. However, the determination is YES at Step S404 (i.e., the data amount that has been read by then reaches the determined data size), this subroutine is ended up.

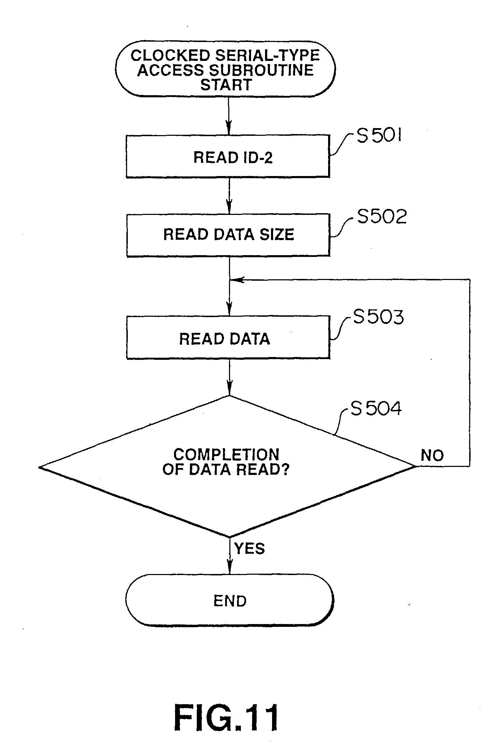

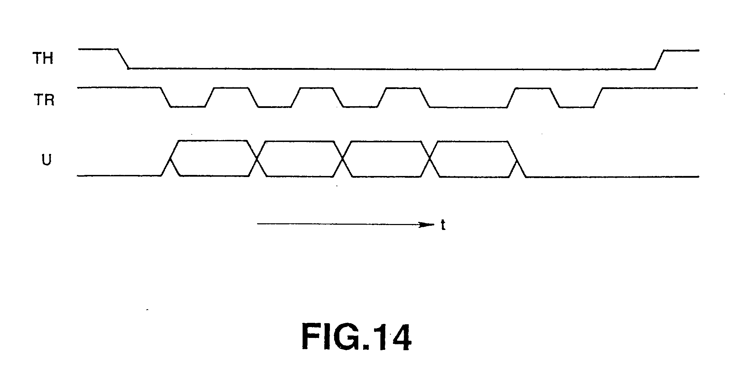

Further, the access subroutine of the clocked serial communication mode will be explained according to Figs. 11 and 14 and Table 6. Fig. 14 exemplifies signal changes for the clocked serial mode, where the logical values of only the signals TH, TR and U are expressed along the elapsed time t.

This communication mode enables to obtain the data U only supplied from a peripheral device when the peripheral selection signal TH is "0" and at the same time, the data request signal TR is repeatedly "1" and "0", both the signals TH and TR being given to the peripheral device from the CPU core 31. The obtained data are exemplified in Table 6.

Table 6

| TH (input) | TR (input) | TL (GND) | R (GND) | L (GND) | D (Vcc) | U (DATA) | Remarks |
|---|---|---|---|---|---|---|---|
| 1 | 1 | 0 | 0 | 0 | 1 | 0 | ID-1(1st) |
| 0 | 1 | 0 | 0 | 0 | 1 | 0 | ID-2(2nd) |
| 0 | ↓↑ | 0 | 0 | 0 | 1 | $SMD_3$ | |
| 0 | ↓↑ | 0 | 0 | 0 | 1 | $SMD_2$ | |
| 0 | ↓↑ | 0 | 0 | 0 | 1 | $SMD_1$ | |
| 0 | ↓↑ | 0 | 0 | 0 | 1 | $SMD_0$ | |
| 0 | ↓↑ | 0 | 0 | 0 | 1 | $ID\text{-}2_3$ | |
| 0 | ↓↑ | 0 | 0 | 0 | 1 | $ID\text{-}2_2$ | |
| 0 | ↓↑ | 0 | 0 | 0 | 1 | $ID\text{-}2_1$ | |
| 0 | ↓↑ | 0 | 0 | 0 | 1 | $ID\text{-}2_0$ | |
| 0 | ↓↑ | 0 | 0 | 0 | 1 | $DSIZE_3$ | |
| 0 | ↓↑ | 0 | 0 | 0 | 1 | $DSIZE_2$ | |
| 0 | ↓↑ | 0 | 0 | 0 | 1 | $DSIZE_1$ | |
| 0 | ↓↑ | 0 | 0 | 0 | 1 | $DSIZE_0$ | |
| 0 | ↓↑ | 0 | 0 | 0 | 1 | $DATA_7$ | |
| : | : : | : | | : : | : | : | |
| : | : : | : | | : : | : | : | |
| 0 | ↓↑ | 0 | 0 | 0 | 1 | $DATA_0$ | |
| 0 | ↓↑ | 0 | 0 | 0 | 1 | CCB | |
| 0 | ↓↑ | 0 | 0 | 0 | 1 | 1 | |
| 0 | ↓↑ | 0 | 0 | 0 | 1 | 1 | |
| 0 | ↓↑ | 0 | 0 | 0 | 1 | 0 | |
| 1 | 1 | 0 | 0 | 0 | 1 | 0 | End M5ID-1st |

As shown in Table 6, only when the peripheral selection signal TH is "0", the data request signal TR is repeated at cycles of "1" and "0" (expressed by upward and downward arrows in Table 6), the signal TL and data R and L are all "0", and the data D is "1", various data U including $SMD_3$ to $SMD_0$, $ID\text{-}2_3$ to $ID\text{-}2_0$, $DSIZE_3$ to $DSIZE_0$, and $DATA_7$ to $DATA_0$ are provided in sequence from the line U through the pin 3. Those data are read by the CPU core 31. Among them, the bit pattern of the data $ID\text{-}2_3$ to $ID\text{-}2_0$ are referred to the table 5 to decide the type of a connected peripheral device (Step S501 in Fig. 11).

The CPU core 31 reads the data size expressed by $DSIZE_0$ to $DSIZE_3$ (Step S502), so that the data size can be determined.

The data are then received by the CPU core 31 during predetermined intervals in a time sequence shown in Fig. 14 (Step S503). The amount of the read data are referred to the determined data size to determine whether the amount reaches the data size (Step S504). If the determination is NO, the processing returns to Step S503 to repeat the foregoing data read. The determination of YES at Step S504 allows to end up this subroutine.

As having been explained, the CPU core 31 exchanges signals with peripheral devices such that data "DATA" are inputted after information of "peripheral ID-1", "peripheral ID-2" and data size "DSIZE".

When the data are inputted into the CPU core 31, the CPU core 31 is to exchange data with the main CPU 21 through the register table 34.

In the above embodiment, although the sub CPU 25 controls the peripheral devices, the main CPU 21 can also perform the above-described processing instead of the sub CPU 25, if the main CPU 21 is directly connected to the peripheral devices.

Further, another identifying method of a communication mode can be used in the present invention. As is described above, the control signals TR and TL are equal in logical values (TR = TL) in the clocked parallel communication mode and the logical values on only specified pins (D, TL, R, L) are changed in specific manners. In case of the three-wire handshake mode, the control signals TR and TL are changed differently. This enables to calculate identification data of peripheral devices based on the pin configurations of the connectors and decide communication modes using the identification data.

**Claims**

1.  A game device (2) for detachable connection with a peripheral device (3a,3b) comprising:

    a peripheral port (4a,4b) with nine terminal contacts including first and second power supply contacts, a set of four data signal contacts R,L,D and U for receiving data signals from a peripheral device (3a,3b), and three contacts TH,TR and TL for transmitting signals from/to the peripheral device; and
    means for controlling collection of data signals which are transmitted from the peripheral device in response to a control signal transmitted from the game device; and
    means for identifying the type of a peripheral device connected to the peripheral port by analysing data signals on the terminal contacts in response to a control signal, characterized in that:
    the game device comprises processing means (25) which collects a data combination (R,L,D and U) transmitted via the four data signal contacts R,L,D and U from a peripheral device connected thereto in response to a first control signal of TH="1" and TR="1" and a second control signal of TH="0" and TR="1" transmitted by the game device via the contacts TH and TR and which determines the communication mode of the peripheral device based on the following formula:

$$\{(\text{data R when TH} = \text{"1"}) \text{ or } (\text{data L when TH} = \text{"1"})\} \times 8h$$

$$+\{(\text{data D when TH} = \text{"1"}) \text{ or } (\text{data U when TH} = \text{"1"})\} \times 4h$$

$$+\{(\text{data R when TH} = \text{"0"}) \text{ or } (\text{data L when TH} = \text{"0"})\} \times 2h$$

$$+\{(\text{data D when TH} = \text{"0"}) \text{ or } (\text{data U when TH} = \text{"0"})\} \times 1h$$

    wherein "1" and "0" correspond to the power source and ground potentials and h represents a hexidecimal number; and
    the processing means collects data signals indicative of switches to be manipulated by an operator of said peripheral device via at least one of the four data signal contacts R, L, D and U from the peripheral device in accordance with the determined communication mode in response to a third control signal transmitted by the game device via the contacts TH and TR subsequently to the first and second control signals.

2.  A game device as claimed in claim 1, characterized in that the interface means (25) is formed so as to communicate with a peripheral device (3a,3b) with any one of the following communication modes: a TH/TR selection type, a three-wire handshake type, a clocked parallel type, and a clocked serial type.

3.  A game device as claimed in claims 1 or 2, wherein when a predetermined value is obtained using said formula based on the combination value on four of said data signal contacts, said game device is arranged to collect data signals on at least one of said data signal contacts in accordance with the communication type corresponding to the value determined using said formula.

4.  A peripheral device (3a,3b) for use with a game device, said peripheral device comprising a plurality of switches operable by user, said switches comprising four key switches for "RIGHT", "LEFT", "DOWN" and "UP" and selection switches, a plug connector (4ap,4bp) which in use is detachably connectable to a peripheral port (4a,4b) of the game device (2), the plug connector (4ap,4bp) comprising four data signal contacts "R", "L", "U" and "D" and a plurality of control signal contacts "TH" and "TR", and a data generator (3Mb) disposed between the plurality of switches and the connector, said peripheral device (3a,3b) having a pair of first and second power supply contacts for providing a power source potential and a ground potential, and means for applying to the contacts logical signals identifying the type of the peripheral device characterised in that:

    the data generator (3Mb) is arranged, in use, to supply the game device (2) via the four data signal contacts R, L, D, U, with a data signal representing the type of the peripheral device and a communication mode with which the peripheral device is to transmit signals to the game device in response to a first control signal of "TH=1" and "TR=1" and a second control signal of "TH=0" and "TR=1" transmitted by the game device via the control signal contacts "TH" and "TR", so that the game device is able to determine the communication mode for receiving data signals from the peripheral device based on the following formula:

{(data R when TH = "1") or (data L when TH = "1")} x 8h

+{(data D when TH = "1") or (data U when TH = "1")} x 4h

+{(data R when TH = "0") or (data L when TH = "0")} x 2h

+{(data D when TH = "0") or (data U when TH = "0")} x 1h

wherein "1" and "0" correspond to the power source and ground potentials and "h" represents a hexadecimal number; and
the data generator (3Mb) is arranged in use to supply the game device (3) with data signals indicative of the plurality of switches, via at least one of the four data signal contacts R, L, D and U in response to a third control signal transmitted by the game device via the contacts TH and TR subsequently to the first and second control signals.

5. A peripheral device as claimed in claim 4, wherein when a predetermined value is obtained using said formula based on the combination value on four of said data signal contacts, said game device is arranged to collect data signals on at least one of said data signal contacts in accordance with the communication type corresponding to the value determined using said formula.

6. A peripheral device as claimed in claim 4 or 5, wherein said third control signal includes TR="0".

7. A peripheral device in combination with the game device as claimed in claim 1, 2 or 3, comprising a plurality of keys and/or switches to be manipulated by an operator, a plug connector (4ap,4bp) detachably connectable to the peripheral port (4a,4b) of the game device (2) and having a plurality of terminal contacts provided corresponding to the terminal contacts of the peripheral port, and means (3M) for transmitting data signals indicative of the key switches.

8. A peripheral device or combination as claimed in claim 4, 5, 6 or 7, wherein:
the peripheral device is arranged to supply a data signal having a data combination of "1" for L, "0" for D and "0" for U, respectively, in response to the first control signal and a data TH/TR signal having a data combination of R, L, D and U indicative of the switches "RIGHT", "LEFT", "UP" and "DOWN", respectively, in response to the second control signal so that the result of the formula is Bh.

9. A peripheral device or combination as claimed in claim 8, wherein:
the data combination supplied by the peripheral device in response to the first control signal further includes data R indicative of one of the switches other than the switches of LEFT, RIGHT, DOWN and UP.

10. A peripheral device or combination as claimed in claim 8 or 9, wherein:

the control signal further comprises a third control signal in a data combination of "TH=1" and "TR=0" and a fourth control signal in a data combination of "TH=0" and "TR=0"; and
the peripheral device further supplies a data signal having a data combination of R, L, D and U indicative of switches other than LEFT, RIGHT, DOWN and UP in response to the third and fourth control signals, respectively.

11. A peripheral device or combination as claimed in claims 9 or 10, wherein the switches other than "RIGHT", "LEFT", "DOWN" and "UP" comprise "TRG-L", "TRG-R", "TRG-A", "TRG-B", "TRG-C", "TRG-X", "TRG-Y", "TRG-Z" and "START".

12. A peripheral device or combination as claimed in claim 4, 5, 6 or 7, wherein:
the peripheral device (3a,3b) supplies a data signal having a data combination of R, L, D and U in response to the first and second control signals so as to cause the result of the formula to be other than Bh.

13. A peripheral device or combination as claimed in claim 4, 5, 6, 7 or 12, wherein:

the peripheral device (3a,3b) is arranged to supply the game device with a data signal having a data combination of "0", "0", "0" and "1" for R, L, D and U, respectively, in response to each of the first and second control signals so as cause the game device (2) to determine that the peripheral device (3a,3b) employs a three-wire handshake type communication mode; and

the peripheral device (3a,3b) is arranged to supply the game device (2) with data signals indicative of the switches via four data signal contacts in response to a control signal in the form of a peripheral selection signal supplied from the game device (2) via the terminal contact TH.

14. A peripheral device or combination as claimed in claim 4, 5, 6, 7, 12 or 13, wherein:

the peripheral device (3a,3b) is arranged to supply an acknowledgement signal to the game device (2) via terminal contact TL.

15. A peripheral device or combination as claimed in claim 4, 5, 6, 7 or 12 wherein:

the peripheral device is arranged to supply the game device, with a data signal having a data combination of "0", "0", "1" and "1" for R, L, D and U, respectively, in response to each of the first and second control signals so as to cause the game device (2) to determine that the peripheral device employs a clocked parallel type communication mode; and

the peripheral device (3a,3b) is arranged to supply the game device with data signals indicative of the switches via four third terminal contacts R, L, D, U in response to a control signal including a peripheral selection signal and a clock signal supplied from the game device (2) via the terminal contacts TH and TR.

16. A peripheral device or combination as claimed in claim 4, 5, 6, 7, 12 or 15 wherein:

the control signal includes a peripheral selection signal and a clock signal;

the peripheral device (3a,3b) further comprises means for maintaining the terminal contact TL at the same potential as that of the terminal contact TR; and

the transmitting means is arranged to transmit a parallel data signal to the game device (2) including data indicative of the switches via the four data signal contacts in synchronism with the clock signal while receiving the peripheral selection signal.

17. A peripheral device or combination as claimed in claim 4, 5, 6, 7 or 12 wherein:

the peripheral device is arranged to supply the game device, a data signal including a data combination of "0", "0", "1" and "0" for R, L, D and U, respectively, in response to each of the first and second control signals so as to cause the apparatus to determine that the peripheral device employs a clocked serial type communication mode; and

the peripheral device is further arranged to supply the game device with data signals indicative of the switches via one of the four data signal contacts R,L,D,U in response to a control signal comprising a peripheral selection signal and a clock signal supplied from the game device (2) via the terminal contacts TH and TR.

18. A peripheral device or combination as claimed in claim 4, 5, 6, 7, 12 or 17 wherein:

the control signal includes a peripheral selection signal and a clock signal;

the peripheral device (3a,3b) further comprises means for maintaining three of the four data signal contacts at the power supply potential or the ground potential; and

said transmitting means (3M) is arranged to transmit to the game device serial data signals indicative of the switches via the remaining one of the data signal contacts in synchronism with the clock signal while receiving the peripheral selection signal.

19. A peripheral device or combination as claimed in any of claims 4 to 10, wherein the peripheral device (3a,3b) comprises means for maintaining the terminal contact TL at the signal level of "1" or the power source potential at all times while the peripheral device (3a,3b,) is accessed by the game device (2).

20. A peripheral device or combination as claimed in claim 4, 5, 6, 7, 12, 15, 16 or 19 wherein the peripheral device (3a,3b) further comprises means for maintaining the terminal contact TL pin at the same potential as that of the terminal contact TR.

21. A peripheral device or combination as claimed in claim 4, 5, 6, 7, 12, 15, 16, 19 or 20 wherein the peripheral device (3a,3b) further includes means for short-circuiting terminal contact TL with the terminal contact TR.

22. A peripheral device or combination as claimed in claim 4, 5, 6, 7, 12, 17 or 18 wherein the peripheral device (3a, 3b) further includes means for short-circuiting three of the four terminal contacts R, L, D, U with the power supply contacts and the transmitting means (3M) supplies the game device (2) with a serial data signal including data indicative of the switches via the remaining one of the terminal contacts R, L, D, U in synchronism with clock signal while receiving a peripheral selection signal.

23. A peripheral device or combination as claimed in claim 4, 5, 6, 7, 12, 17, 18 or 22, wherein the peripheral device (3a,3b) further comprises means for maintaining three of the four terminal contacts R, L, D, U at the same potential as that of the power supply contacts.

24. A peripheral device or combination as claimed in any of claims 4 to 23, wherein the peripheral device (3a,3b) comprises means for configuring the set of terminal contacts to be indicative of the communication mode of the peripheral device.

25. A peripheral device or combination as claimed in claim 24, wherein said configuring means comprises means for short-circuiting selected ones of the terminal contacts.

26. A peripheral device or combination as claimed in claim 25, wherein the short-circuiting means are formed in the plug connector.

27. A peripheral device or combination as claimed in any one of claims 4 to 26, wherein there is provided a printed circuit board on which means (3M) for generating the data signals to be supplied to the game device (2) is arranged and a cable (5a) having a plurality of wires connects the terminal contacts of the plug connector with the printed circuit board.

28. A peripheral device or combination as claimed in claim 27, wherein the wires of the cable (5a) are fewer in number than the terminal contacts of the peripheral port (4a,4b).

29. A peripheral device or combination as claimed in claim 27 or 28 when appended to claim 25, wherein the short-circuiting means are formed on the circuit board.

30. A peripheral device or combination as claimed in any of claims 4 to 29, wherein the nine terminal contacts are disposed in parallel in a single row.

**Patentansprüche**

1. Spielgerät (2) zur lösbaren Verbindung mit einem Peripheriegerät (3a,3b) welches aufweist:

einen Peripherieanschluß (4a,4b) mit neun Anschlußkontakten einschließlich ersten und zweiten Spannungsquellenkontakten, einem Satz von vier Datensignalkontakten R,L,D und U zum Empfang von Datensignalen aus einem Peripheriegerät (3a,3b) und drei Kontakten TH, TR und TL zum Übertragen von Signalen von/zu dem Peripheriegerät; und
eine Einrichtung zum Steuern der Erfassung von Datensignalen, die vom Peripheriegerät in Abhängigkeit von einem vom Spielgerät übertragenen Steuersignal übertragen werden; und
eine Einrichtung zum Identifizieren der Art eines Peripheriegeräts, das mit dem Peripherieanschluß verbunden ist, indem Datensignale an den Anschlußkontakten in Abhängigkeit von einem Steuersignal analysiert werden, dadurch gekennzeichnet, daß
das Spielgerät eine Verarbeitungseinrichtung (25) aufweist, die eine Datenkombination (R,L,D und U) erfaßt, welche über die vier Datensignalkontakte R,L,D und U von einem damit verbundenen Peripheriegerät in Abhängigkeit von einem ersten Steuersignal von TH="1" und TR="1" und einem zweiten Steuersignal von TH="0" und TR="1" vom Spielgerät über die Kontakte TH und TR übertragen wird und den Verbindungsmodus des Peripheriegeräts aufgrund der folgenden Formel bestimmt:

{(data R wenn TH = "1") oder (data L wenn TH = "1")} x 8h

+{(data D wenn TH = "1") oder (data U wenn TH = "1")} x 4h

+{(data R wenn TH = "0") oder (data L wenn TH = "0")} x 2h

+{(data D wenn TH = "0") oder (data U wenn TH = "0")} x 1h

wobei "1" und "0" dem Potential der Spannungsquelle und der Erde entsprechen und h eine Hexadezimalzahl darstellt; und

die Verarbeitungseinrichtung Datensignale, die Schalter angeben, die von einer Bedienungsperson des Peripheriegeräts zu betätigen sind, über wenigstens einen der vier Datensignalkontakte R,L,D und U vom Peripheriegerät erfaßt entsprechend dem bestimmten Verbindungsmodus in Abhängigkeit von einem dritten Steuersignal, das vom Spielgerät über die Kontakte TH und TR nach dem ersten und zweiten Steuersignal übertragen wird.

2. Spielgerät nach Anspruch 1, dadurch gekennzeichnet, daß die Interface-Einrichtung (25) so gebildet ist, daß sie mit einem Peripheriegerät (3a,3b) mit einem der folgenden Verbindungsmoden in Verbindung steht: einem TH/TR-Wahltyp, einem Dreidraht-Handshake-Typ, einem zeitgesteuerten Paralleltyp und einem zeitgesteuerten Reihentyp.

3. Spielgerät nach Anspruch 1 oder 2, bei welchem, wenn ein vorbestimmter Wert unter Verwendung der auf dem Kombinationswert von vier der Datensignalkontakte beruhenden Formel erreicht ist, das Spielgerät so gesteuert wird, daß es Datensignale an wenigstens einen der Datensignalkontakte gemäß dem Verbindungstyp erfaßt, welcher dem mit Verwendung der Formel bestimmten Wert entspricht.

4. Peripheriegerät (3a,3b) zur Verwendung mit einem Spielgerät, wobei das Peripheriegerät eine Anzahl von Schaltern aufweist, die vom Benutzer betätigbar sind, wobei die Schalter vier Tastenschalter für "RECHTS", "LINKS", "UNTEN" und "OBEN" sowie Wählschalter umfassen, einen Steckverbinder (4ap,4bp), der bei Gebrauch an einen Peripherieanschluß (4a,4b) des Spielgeräts (2) lösbar anschließbar ist, wobei der Steckverbinder (4ap,4bp) vier Datensignalkontakte "R", "L", "U" und "D" und mehrere Steuersignalkontakte "TH" und "TR" aufweist, und einen Datengenerator (3Mb), der zwischen der Anzahl von Schaltern und dem Verbinder angeordnet ist, wobei das Peripheriegerät (3a,3b) ein Paar von ersten und zweiten Spannungsquellenkontakten zur Bildung eines Spannungsquellenpotentials und eines Erdpotentials aufweist, sowie eine Einrichtung zum Aufgeben von logischen Signalen auf die Kontakte, welche den Typ des Peripheriegeräts identifizieren, dadurch gekennzeichnet, daß

der Datengenerator (3MB) bei Gebrauch so angeordnet und ausgebildet ist, daß er dem Spielgerät (2) über die vier Datensignalkontakte R,L,D,U ein Datensignal zuführt, welches dem Typ des Peripheriegeräts und einem Verbindungsmodus entspricht, bei dem das Peripheriegerät Signale auf das Spielgerät in Abhängigkeit von einem ersten Steuersignal von "TH=1" und "TR=1" und einem zweiten Steuersignal von "TH=0" und "TR=1" überträgt, die vom Spielgerät über die Steuersignalkontakte "TH" und "TR" so übertragen werden, daß das Spielgerät in der Lage ist, den Verbindungsmodus zum Empfang von Datensignalen vom Peripheriegerät auf Grundlage der folgenden Formel zu bestimmen:

{(data R wenn TH = "1") oder (data L wenn TH = "1")} x 8h

+{(data D wenn TH = "1") oder (data U wenn TH = "1")} x 4h

+{(data R wenn TH = "0") oder (data L wenn TH = "0")} x 2h

+{(data D wenn TH = "0") oder (data U wenn TH = "0")} x 1h

wobei "1" und "0" dem Potential der Spannungsquelle und der Erde entsprechen und "h" eine hexadezimale Zahl darstellt; und

der Generator (3Mb) bei Gebrauch so ausgebildet und angeordnet ist, daß er das Spielgerät (3) mit Datensignalen versorgt, welche die Anzahl von Schaltern angeben, über wenigstens einen der vier Datensignalkontakte R,L,D und U in Abhängigkeit von einem dritten Steuersignal, das vom Spielgerät über die Kontakte TH und TR nach dem ersten und zweiten Steuersignal übertragen wird.

**5.** Peripheriegerät nach Anspruch 4, bei welchem, wenn ein vorbestimmter Wert bei Verwendung der Formel auf der Basis des Kombinationswertes von vier der Datensignalkontakte erreicht ist, das Spielgerät so ausgebildet und angeordnet ist, daß es Datensignale an wenigstens einem der Datensignalkontakte gemäß dem Verbindungstyp entsprechend dem unter Verwendung der Formel bestimmten Wert erfaßt.

**6.** Peripheriegerät nach Anspruch 4 oder 5, bei welchem das dritte Steuersignal TR="0" enthält.

**7.** Peripheriegerät in Kombination mit dem Spielgerät nach Anspruch 1, 2 oder 3, mit einer Anzahl von Tasten und/ oder Schaltern, die von einer Bedienungsperson zu betätigen sind, einem Steckverbinder (4ap,4bp), der mit dem Peripherieanschluß (4a,4b) des Spielgeräts (2) lösbar zu verbinden ist und eine Anzahl von Anschlußkontakten entsprechend den Anschlußkontakten des Peripherieanschlusses aufweist, und mit einer Einrichtung (3M) zum Übertragen von Datensignalen, welche die Tastenschalter angeben.

**8.** Peripheriegerät oder Kombination nach Anspruch 4, 5, 6 oder 7, bei welchem bzw. bei welcher:
das Peripheriegerät so ausgebildet und angeordnet ist, daß es jeweils ein Datensignal mit einer Datenkombination von "1" für L, "0" für D bzw. "0" für U in Abhängigkeit vom ersten Steuersignal und ein TH/TR-Datensignal mit einer Datenkombination von R,L,D und U, welche die Schalter "RECHTS", "LINKS", "OBEN" bzw. "UNTEN" angeben, in Abhängigkeit vom zweiten Steuersignal liefert, so daß das Ergebnis der Formel Bh ist.

**9.** Peripheriegerät oder Kombination nach Anspruch 8, bei welchem bzw. welcher:
die dem Peripheriegerät in Abhängigkeit vom ersten Steuersignal zugeführte Datenkombination ferner das Datum R umfaßt, das einen der Schalter angibt, die sich von den Schaltern für "LINKS", "RECHTS", "UNTEN" und "OBEN" unterscheiden.

**10.** Peripheriegerät oder Kombination nach Anspruch 8 oder 9, bei welchem bzw. welcher:

das Steuersignal ferner ein drittes Steuersignal in einer Datenkombination von "TH=1" und "TR=0" und ein viertes Steuersignal in einer Datenkombination von "TH=0" und "TR=0" umfaßt; und
das Peripheriegerät ferner ein Datensignal mit einer Datenkombination von R,L,D und U liefert, das andere Schalter als LINKS, RECHTS, UNTEN und OBEN angibt, in Abhängigkeit vom dritten bzw. vierten Steuersignal.

**11.** Peripheriegerät oder Kombination nach Anspruch 9 oder 10, bei welchem bzw. welcher die von "RECHTS", "LINKS", "UNTEN" und "OBEN" verschiedenen Schalter "TRG-L", "TRG-R", "TRG-A", "TRG-B", "TRG-C", "TRG-X", "TRG-Y", "TRG-Z" und "START" umfassen.

**12.** Peripheriegerät oder Kombination nach Anspruch 4, 5, 6 oder 7, bei welchem bzw. welcher:
das Peripheriegerät (3a,3b) ein Datensignal mit einer Datenkombination von R,L,D und U in Abhängigkeit vom ersten und zweiten Steuersignal liefert, um zu bewirken, daß das Ergebnis der Formel sich von Bh unterscheidet.

**13.** Peripheriegerät oder Kombination nach Anspruch 4, 5, 6, 7 oder 12, bei welchem bzw. welcher:

das Peripheriegerät (3a,3b) so ausgebildet und angeordnet ist, daß es dem Spielgerät ein Datensignal mit einer Datenkombination von "0", "0", "0" und "1" für R,L,D bzw. U in Abhängigkeit vom ersten oder zweiten Steuersignal liefert, um das Spielgerät (2) zu veranlassen, zu bestimmen, daß das Peripheriegerät (3a,3b) einen Verbindungsmodus vom Dreidraht-Handshake-Typ verwendet; und
das Peripheriegerät (3a,3b) so ausgebildet und angeordnet ist, daß es dem Spielgerät (2) Datensignale zuführt, welche die Schalter über vier Datensignalkontakte entsprechend einem Steuersignal in Form eines Peripheriewählsignals angibt, das vom Spielgerät (2) über den Anschlußkontakt TH zugeführt wird.

**14.** Peripheriegerät oder Kombination nach Anspruch 4, 5, 6, 7, 12 oder 13, bei welchem bzw. welcher:
das Peripheriegerät (3a,3b) so ausgebildet und angeordnet ist, daß es ein Bestätigungssignal zum Spielgerät (2) über den Anschlußkontakt TL liefert.

**15.** Peripheriegerät oder Kombination nach Anspruch 4, 5, 6, 7 oder 12, bei welchem bzw. welcher:

das Peripheriegerät so ausgebildet und angeordnet ist, daß es dem Spielgerät ein Datensignal mit einer Datenkombination von "0", "0", "1" und "1" für R,L,D bzw. U in Abhängigkeit vom ersten oder zweiten Steuersignal liefert, um das Spielgerät (2) zu veranlassen, zu bestimmen, daß das Peripheriegerät einen Verbindungsmodus vom zeitgesteuerten Paralleltyp verwendet; und

das Peripheriegerät (3a,3b) so ausgebildet und angeordnet ist, daß es dem Spielgerät Datensignale, welche die Schalter angeben, über vier dritte Anschlußkontakte R,L,D,U in Abhängigkeit von einem Steuersignal zuführt, welches ein Peripheriewählsignal und ein Taktsignal umfaßt, das vom Spielgerät (2) über die Anschlußkontakte TH und TR zugeführt wird.

16. Peripheriegerät oder Kombination nach Anspruch 4, 5, 6, 7, 12 oder 15, bei welchem bzw. welcher:

das Steuersignal ein Peripheriewählsignal und ein Taktsignal umfaßt;

das Peripheriegerät (3a,3b) ferner eine Einrichtung zum Halten des Anschlußkontaktes TL auf dem gleichen Potential wie demjenigen des Anschlußkontakts TR umfaßt; und

die Übertragungseinrichtung so ausgebildet und angeordnet ist, daß sie ein paralleles Datensignal zum Spielgerät (2) einschließlich die Schalter angebenden Daten über die vier Datensignalkontakte synchron mit dem Taktsignal überträgt, während sie das Peripheriewählsignal empfängt.

17. Peripheriegerät oder Kombination nach Anspurch 4, 5, 6, 7 oder 12, bei welchem bzw. welcher:

das Peripheriegerät so ausgebildet und angeordnet ist, daß es dem Spielgerät ein Datensignal einschließlich einer Datenkombination von "0", "0", "1" und "0" für R,L,D bzw. U in Abhängigkeit vom ersten oder zweiten Steuersignal überträgt, um die Vorrichtung zu veranlassen, zu bestimmen, daß das Peripheriegerät einen Verbindungsmodus vom zeitgesteuerten Reihentyp verwendet; und

das Peripheriegerät ferner so ausgebildet und angeordnet ist, daß es dem Spielgerät Datensignale, welche die Schalter angeben, über einen der vier Datensignalkontakte R,L,D,U in Abhängigkeit von einem Steuersignal zuführt, das ein Peripheriewählsignal und ein Taktsignal enthält, das vom Spielgerät (2) über die Anschlußkontakte TH und TR geliefert wird.

18. Peripheriegerät nach Anspruch 4,5,6,7,12 oder 17, bei welchem bzw. welcher:

das Steuersignal ein Peripheriewählsignal und ein Taktsignal umfaßt;

das Peripheriegerät (3a,3b) ferner eine Einrichtung zum Halten von drei der vier Datensignalkontakten auf dem Potential der Spannungsquelle oder dem Erdpotential aufweist; und

die Übertragungseinrichtung (3M) so ausgebildet und angeordnet ist, daß sie zum Spielgerät Reihendatensignale, welche die Schalter angeben, über dem verbleibenden Datensignalkontakt synchron zu dem Taktsignal überträgt, während sie das Peripheriewählsignal empfängt.

19. Peripheriegerät oder Kombination nach einem der Ansprüche 4 bis 10, bei welchem bzw. welcher das Peripheriegerät (3a,3b) eine Einrichtung zum Halten des Anschlußkontakts TL auf dem Signalwert "1" oder dem Potential der Spannungsquelle zu jedem Zeitpunkt aufweist, während auf das Peripheriegerät (3a,3b) vom Spielgerät (2) zugegriffen wird.

20. Peripheriegerät oder Kombination nach Anspruch 4, 5, 6, 7, 12, 15, 16 oder 19, bei welchem bzw. welcher das Peripheriegerät (3a,3b) ferner eine Einrichtung zum Halten des Anschlußkontakts TL auf dem gleichen Potential wie demjenigen des Anschlußkontakts TR umfaßt.

21. Peripheriegerät oder Kombination nach Anspruch 4, 5, 6, 7, 12, 15, 16, 19 oder 20, bei welchem bzw. welcher das Peripheriegerät (3a,3b) ferner eine Einrichtung zum Kurzschließen des Anschlußkontaktes TL mit dem Anschlußkontakt TR umfaßt.

22. Peripheriegerät oder Kombination nach Anspruch 4, 5, 6, 7, 12, 17 oder 18, bei welchem bzw. welcher das Peripheriegerät (3a,3b) ferner eine Einrichtung zum Kurzschließen von drei der vier Anschlußkontakte R,L,D,U mit den Spannungsquellenkontakten umfaßt, und die Übertragungseinrichtung (3M) dem Spielgerät (2) ein Reihendatensignal einschließlich der die Schalter angebenden Daten über den verbleibenden Anschlußkontakt R,L,D,U synchron zum Taktsignal zuführt, während sie ein Peripheriewählsignal empfängt.

23. Peripheriegerät oder Kombination nach Anspruch 4, 5, 6, 7, 12, 17, 18 oder 22, bei welchem bzw. welcher das Peripheriegerät (3a,3b) ferner eine Einrichtung zum Halten von drei der vier Anschlußkontakten R,L,D,U auf dem gleichen Potential wie demjenigen der Spannungsquellenkontakte umfaßt.

**24.** Peripheriegerät oder Kombination nach einem der Ansprüche 4 bis 23, bei welchem bzw. welcher das Peripheriegerät (3a,3b) eine Einrichtung zum Konfigurieren des Satzes von Anschlußkontakten enthält, die den Verbindungsmodus des Peripheriegeräts angeben.

**25.** Peripheriegerät oder Kombination nach Anspruch 24, bei welchem bzw. welcher die Einrichtung zum Konfigurieren eine Einrichtung zum Kurzschließen ausgewählter Anschlußkontakte enthält.

**26.** Peripheriegerät oder Kombination nach Anspruch 25, bei welchem bzw. welcher die Kurzschließeinrichtung im Steckverbinder ausgebildet ist.

**27.** Peripheriegerät oder Kombination nach einem der Ansprüche 4 bis 26, bei welchem bzw. welcher eine gedruckte Schaltungsplatte vorgesehen ist, auf der eine Einrichtung (3M) zum Erzeugen der zum Spielgerät (2) zu liefernden Datensignale angeordnet ist, und ein Kabel (5a) mit einer Anzahl von Drähten die Anschlußkontakte des Steckverbinders mit der gedruckten Schaltungsplatte verbindet.

**28.** Peripheriegerät oder Kombination nach Anspruch 27, bei welchem bzw. welcher die Drähte des Kabels (5a) in geringerer Anzahl vorhanden sind als die Anschlußkontakte des Peripherieanschlusses (4a,4b).

**29.** Peripheriegerät oder Kombination nach Anspruch 27, rückbezogen auf Anspruch 25, bei welchem bzw. welcher die Kurzschließeinrichtung auf der Schaltungsplatte ausgebildet ist.

**30.** Peripheriegerät oder Kombination nach einem der Ansprüche 4 bis 29, bei welchem bzw. welcher die neun Anschlußkontakte parallel in einer einzigen Reihe angeordnet sind.

**Revendications**

**1.** Dispositif de jeu (2) pour une connexion détachable avec un dispositif périphérique (3a, 3b), comprenant :

un port de périphérique (4a, 4b) avec neuf contacts à borne comprenant des premier et deuxième contacts d'alimentation, un jeu de quatre contacts de signaux de données R, L, D et U pour recevoir des signaux de données venant d'un dispositif périphérique (3a, 3b), et trois contacts TH, TR et TL pour transmettre des signaux de et vers le dispositif périphérique ; et
des moyens pour commander la collecte de signaux de données qui sont transmis à partir du dispositif périphérique en réponse à un signal de commande transmis à partir du dispositif de jeu ; et
des moyens pour identifier le type d'un dispositif périphérique connecté au port de périphérique en analysant des signaux de données sur les contacts à borne en réponse à un signal de commande, caractérisé en ce que :
le dispositif de jeu comprend des moyens de traitement (25) qui collectent une combinaison de données (R, L, D et U) transmise par l'intermédiaire des quatre contacts de signaux de données R, L, D et U à partir d'un dispositif périphérique connecté à ceux-ci en réponse à un premier signal de commande TH = "1" et TR = "1" et à un deuxième signal de commande TH = "0" et TR = "1" transmis par le dispositif de jeu par l'intermédiaire des contacts TH et TR, et qui déterminent le mode de communication du dispositif périphérique selon la formule suivante :

$$\{(\text{données R lorsque TH} = "1") \text{ ou } (\text{données L lorsque TH} = "1")\} \times 8h$$

$$+ \{(\text{données D lorsque TH} = "1") \text{ ou } (\text{données U lorsque TH} = "1")\} \times 4h$$

$$+ \{(\text{données R lorsque TH} = "0") \text{ ou } (\text{données L lorsque TH} = "0")\} \times 2h$$

$$+ \{(\text{données D lorsque TH} = "0") \text{ ou } (\text{données U lorsque TH} = "0")\} \times 1h$$

dans laquelle "1" et "0" correspondent aux potentiels de source d'alimentation et de masse et h représente un nombre hexadécimal ; et
les moyens de traitement collectent des signaux de données indicatifs de commutateurs devant être manipulés par un opérateur dudit dispositif périphérique par l'intermédiaire d'au moins l'un des quatre contacts de signaux de données R, L, D et U venant du dispositif périphérique selon le mode de communication déterminé en réponse à un troisième signal de commande transmis par le dispositif de jeu par l'intermédiaire des contacts TH et TR après les premier et deuxième signaux de commande.

2. Dispositif de jeu selon la revendication 1, caractérisé en ce que les moyens formant interface (25) sont formés de façon à communiquer avec un dispositif périphérique (3a, 3b) avec l'un quelconque des modes de communication suivants : un type à sélection TH/TR, un type rencontre par liaison à trois fils, un type parallèle à horloge, et un type série à horloge.

3. Dispositif de jeu selon la revendication 1 ou 2, dans lequel, lorsqu'une valeur prédéterminée est obtenue en utilisant ladite formule basée sur la valeur de combinaison de quatre desdits contacts de signaux de données, ledit dispositif de jeu est configuré pour collecter des signaux de données sur au moins l'un desdits contacts de signaux de données en fonction du type de communication correspondant à la valeur déterminée à l'aide de ladite formule.

4. Dispositif périphérique (3a, 3b) destiné à être utilisé avec un dispositif de jeu, ledit dispositif périphérique comprenant une pluralité de commutateurs pouvant être actionnés par un utilisateur, lesdits commutateurs comprenant quatre commutateurs à touche pour "DROITE", "GAUCHE", "BAS" et "HAUT" et des commutateurs de sélection, un connecteur à fiche (4ap, 4bp) qui, lors de l'utilisation, peut être connecté de façon détachable à un port de périphérique (4a, 4b) du dispositif de jeu (2), le connecteur à fiche (4ap, 4bp) comprenant quatre contacts de signaux de données "R", "L", "U" et "D" et une pluralité de contacts de signaux de commande "TH" et "TR", et un générateur de données (3Mb) disposé entre la pluralité de commutateurs et le connecteur, ledit dispositif périphérique (3a, 3b) comportant une paire de premier et deuxième contacts d'alimentation pour délivrer un potentiel de source d'alimentation et un potentiel de masse, et des moyens pour appliquer aux contacts des signaux logiques identifiant le type du dispositif périphérique, caractérisé en ce que :

le générateur de données (3Mb) est configuré, lors de l'utilisation, pour délivrer au dispositif de jeu (2), par l'intermédiaire des quatre contacts de signaux de données R, L, D, U, un signal de données représentant le type du dispositif périphérique et un mode de communication avec lequel le dispositif périphérique doit transmettre des signaux au dispositif de jeu en réponse à un premier signal de commande "TH = 1" et "TR = 1", et à un deuxième signal de commande "TH = 0" et "TR = 1" transmis par le dispositif de jeu par l'intermédiaire des contacts de signaux de commande "TH" et "TR", de telle sorte que le dispositif de jeu soit capable de déterminer le mode de communication pour recevoir des signaux de données du dispositif périphérique selon la formule suivante :

$$\{(\text{données R lorsque TH = "1"}) \text{ ou } (\text{données L lorsque TH = "1"})\} \times 8h$$

$$+ \{(\text{données D lorsque TH = "1"}) \text{ ou } (\text{données U lorsque TH = "1"})\} \times 4h$$

$$+ \{(\text{données R lorsque TH = "0"}) \text{ ou } (\text{données L lorsque TH = "0"})\} \times 2h$$

$$+ \{(\text{données D lorsque TH = "0"}) \text{ ou } (\text{données U lorsque TH = "0"})\} \times 1h$$

dans laquelle "1" et "0" correspondent aux potentiels de source d'alimentation et de masse, et "h" représente un nombre hexadécimal ; et
le générateur de données (3Mb) est configuré, lors de l'utilisation, pour délivrer au dispositif de jeu (3) des signaux de données indicatifs de la pluralité de commutateurs, par l'intermédiaire d'au moins l'un des quatre contacts de signaux de données R, L, D et U en réponse à un troisième signal de commande transmis par le dispositif de jeu par l'intermédiaire des contacts TH et TR après les premier et deuxième signaux de commande.

5. Dispositif périphérique selon la revendication 4, dans lequel, lorsqu'une valeur prédéterminée est obtenue à l'aide de ladite formule basée sur la valeur de combinaison de quatre desdits contacts de signaux de données, ledit dispositif de jeu est configuré de façon à collecter des signaux de données sur au moins l'un desdits contacts de signaux de données selon le type de communication correspondant à la valeur déterminée à l'aide de ladite formule.

**6.** Dispositif périphérique selon la revendication 4 ou 5, dans lequel ledit troisième signal de commande comprend TR = "0".

**7.** Dispositif de commande en combinaison avec le dispositif de jeu selon la revendication 1, 2 ou 3, comprenant une pluralité de touches et/ou de commutateurs devant être manipulés par un opérateur, un connecteur à fiche (4ap, 4bp) pouvant être connecté de façon détachable au port de périphérique (4a, 4b) du dispositif de jeu (2) et comportant une pluralité de contacts à borne disposés en correspondance avec les contacts à borne du port de périphérique, et des moyens (3M) pour transmettre des signaux de données indicatifs des commutateurs à touche.

**8.** Dispositif périphérique ou combinaison selon la revendication 4, 5, 6 ou 7, dans lesquels :

le dispositif périphérique est configuré de façon à délivrer un signal de données ayant une combinaison de données de "1" pour L, "0" pour D et "0" pour U, respectivement, en réponse au premier signal de commande et à un signal de données TH/TR ayant une combinaison de données de R, L, D et U indicative des commutateurs "DROITE", "GAUCHE", "HAUT" et "BAS", respectivement, en réponse au deuxième signal de commande, de telle sorte que le résultat de la formule soit Bh.

**9.** Dispositif périphérique ou combinaison selon la revendication 8, dans lesquels :

la combinaison de données délivrée par le dispositif périphérique en réponse au premier signal de commande comprend de plus des données R indicatives de l'un des commutateurs autre que les commutateurs GAUCHE, DROITE, BAS et HAUT.

**10.** Dispositif périphérique ou combinaison selon la revendication 8 ou 9, dans lesquels :

le signal de commande comprend de plus un troisième signal de commande dans une combinaison de données "TH = 1" et "TR = 0" et un quatrième signal de commande dans une combinaison de données "TH = 0" et "TR = 0" ; et
le dispositif périphérique délivre de plus un signal de données ayant une combinaison de données de R, L, D et U indicative de commutateurs autres que GAUCHE, DROITE, BAS et HAUT en réponse aux troisième et quatrième signaux de commande, respectivement.

**11.** Dispositif périphérique ou combinaison selon la revendication 9 ou 10, dans lesquels les commutateurs autres que "DROITE", "GAUCHE", "BAS" et "HAUT" comprennent "TRG-L", TRG-R", "TRG-A, "TRG-B", "TRG-C", "TRG-X" "TRG-Y", "TRG-Z" et "DEMARRAGE".

**12.** Dispositif périphérique ou combinaison selon la revendication 4, 5, 6 ou 7, dans lesquels :

le dispositif périphérique (3a, 3b) délivre un signal de données ayant une combinaison de données de R, L, D et U en réponse aux premier et deuxième signaux de commande de façon à faire en sorte que le résultat de la formule soit différent de Bh.

**13.** Dispositif périphérique ou combinaison selon la revendication 4, 5, 6, 7 ou 12, dans lesquels :

le dispositif périphérique (3a, 3b) est configuré de façon à délivrer au dispositif de jeu un signal de données ayant une combinaison de données "0", "0", "0" et "1", pour R, L, D et U, respectivement, en réponse à chacun des premier et deuxième signaux de commande de façon à faire déterminer par le dispositif de jeu (2) que le dispositif périphérique (3a, 3b) emploie un mode de communication du type rencontre par liaison à trois fils ; et
le dispositif périphérique (3a, 3b) est configuré de façon à délivrer au dispositif de jeu (2) des signaux de données indicatifs des commutateurs par l'intermédiaire de quatre contacts de signaux de données en réponse à un signal de commande sous la forme d'un signal de sélection de périphérique délivré par le dispositif de jeu (2) par l'intermédiaire du contact à borne TH.

**14.** Dispositif périphérique ou combinaison selon la revendication 4, 5, 6, 7, 12 ou 13, dans lesquels :

le dispositif périphérique (3a, 3b) est configuré de façon à délivrer un signal d'accusé de réception au dispositif de jeu (2) par l'intermédiaire du contact à borne TL.

**15.** Dispositif périphérique ou combinaison selon la revendication 4, 5, 6, 7 ou 12, dans lesquels :

le dispositif périphérique est configuré de façon à délivrer au dispositif de jeu un signal de données ayant une combinaison de données "0", "0", "1" et "1" pour R, L, D et U, respectivement, en réponse à chacun des premier et deuxième signaux de commande de façon à faire déterminer par le dispositif de jeu (2) que le dispositif périphérique emploie un mode de communication du type parallèle à horloge ; et

le dispositif périphérique (3a, 3b) est configuré de façon à délivrer au dispositif de jeu des signaux de données indicatifs des commutateurs par l'intermédiaire de quatre troisièmes contacts à borne R, L, D, U en réponse à un signal de commande comprenant un signal de sélection de périphérique et un signal d'horloge délivrés par le dispositif de jeu (2) par l'intermédiaire des contacts à borne TH et TR.

16. Dispositif périphérique ou combinaison selon la revendication 4, 5, 6, 7, 12 ou 15, dans lesquels :

le signal de commande comprend un signal de sélection de périphérique et un signal d'horloge ;
le dispositif périphérique (3a, 3b) comprend de plus des moyens pour maintenir le contact à borne TL au même potentiel que le contact à borne TR ; et
les moyens de transmission sont configurés de façon à transmettre un signal de données parallèles au dispositif de jeu (2), comprenant des données indicatives des commutateurs, par l'intermédiaire des quatre contacts de signaux de données en synchronisme avec le signal d'horloge, tout en recevant le signal de sélection de périphérique.

17. Dispositif périphérique ou combinaison selon la revendication 4, 5, 6, 7 ou 12, dans lesquels :

le dispositif périphérique est configuré de façon à délivrer au dispositif de jeu un signal de données comprenant une combinaison de données "0", "0", "1" et "0" pour R, L, D et U, respectivement, en réponse à chacun des premier et deuxième signaux de commande, de façon à faire déterminer par le système que le dispositif périphérique emploie un mode de communication du type série à horloge ; et
le dispositif périphérique est de plus configuré pour délivrer au dispositif de jeu des signaux de données indicatifs des commutateurs par l'intermédiaire de l'un des quatre contacts de signaux de données, R, L, D, U en réponse à un signal de commande comprenant un signal de sélection de périphérique et un signal d'horloge délivrés par le dispositif de jeu (2) par l'intermédiaire des contacts à borne TH et TR.

18. Dispositif périphérique ou combinaison selon la revendication 4, 5, 6, 7, 12 ou 17, dans lesquels :

le signal de commande comprend un signal de sélection de périphérique et un signal d'horloge ;
le dispositif périphérique (3a, 3b) comprend de plus des moyens pour maintenir trois des quatre contacts de signaux de données au potentiel d'alimentation ou au potentiel de masse ; et
lesdits moyens de transmission (3M) sont configurés de façon à transmettre au dispositif de jeu des signaux de données série indicatifs des commutateurs par l'intermédiaire du contact restant des contacts de signaux de données en synchronisme avec le signal d'horloge tout en recevant le signal de sélection de périphérique.

19. Dispositif périphérique ou combinaison selon l'une quelconque des revendications 4 à 10, dans lesquels le dispositif périphérique (3a, 3b) comprend des moyens pour maintenir le contact à borne TL au niveau de signal "1" ou au potentiel de source d'alimentation à tout moment lorsque le dispositif de jeu (2) accède au dispositif périphérique (3a, 3b).

20. Dispositif périphérique ou combinaison selon la revendication 4, 5, 6, 7, 12, 15, 16 ou 19, dans lesquels le dispositif périphérique (3a, 3b) comprend de plus des moyens pour maintenir la broche du contact à borne TL au même potentiel que celle du contact à borne TR.

21. Dispositif périphérique ou combinaison selon la revendication 4, 5, 6, 7, 12, 15, 16, 19 ou 20, dans lesquels le dispositif périphérique (3a, 3b) comprend de plus des moyens pour court-circuiter le contact à borne TL avec le contact à borne TR.

22. Dispositif périphérique ou combinaison selon la revendication 4, 5, 6, 7, 12, 17 ou 18, dans lesquels le dispositif périphérique (3a, 3b) comprend de plus des moyens pour court-circuiter trois des quatre contacts à borne R, L, D, U avec les contacts d'alimentation, et les moyens de transmission (3M) délivrent au dispositif de jeu (2) un signal de données série comprenant des données indicatives des commutateurs par l'intermédiaire du contact restant des contacts à borne R, L, D, U en synchronisme avec un signal d'horloge, tout en recevant un signal de sélection de périphérique.

23. Dispositif périphérique ou combinaison selon la revendication 4, 5, 6, 7, 12, 17, 18 ou 22, dans lesquels le dispositif périphérique (3a, 3b) comprend de plus des moyens pour maintenir trois des quatre contacts à borne R, L, D, U au même potentiel que les contacts d'alimentation.

24. Dispositif périphérique ou combinaison selon l'une quelconque des revendications 4 à 23, dans lequel le dispositif périphérique (3a, 3b) comprend des moyens pour configurer le jeu de contacts à borne de façon à ce qu'il soit indicatif du mode de communication du dispositif périphérique.

25. Dispositif périphérique ou combinaison selon la revendication 24, dans lesquels lesdits moyens de configuration comprennent des moyens pour court-circuiter des contacts sélectionnés parmi les contacts à borne.

26. Dispositif périphérique ou combinaison selon la revendication 25, dans lesquels les moyens de court-circuit sont formés dans le connecteur à fiche.

27. Dispositif périphérique ou combinaison selon l'une quelconque des revendications 4 à 26, dans lesquels est disposée une carte de circuits imprimés sur laquelle des moyens (3M) pour générer les signaux de données devant être délivrés au dispositif de jeu (2) sont disposés, et un câble (5a) comportant une pluralité de fils connecte les contacts à borne du connecteur à fiche à la carte de circuits imprimés.

28. Dispositif périphérique ou combinaison selon la revendication 27, dans lequel les fils du câble (5a) sont en nombre inférieur à celui des contacts à borne du port de périphérique (4a, 4b).

29. Dispositif périphérique ou combinaison selon la revendication 27 ou 28, lorsqu'elles dépendent de la revendication 25, dans lesquels les moyens de court-circuit sont formés sur la carte de circuits.

30. Dispositif périphérique ou combinaison selon l'une quelconque des revendications 4 à 29, dans lequel les neuf contacts à borne sont disposés en parallèle dans une rangée unique.

FIG.1

# FIG.2

FIG.3

FIG.4

| PIN No. | 1 | 2 | 3 | 4 | 5 | 6 | 7 | 8 | 9 |
|---------|-----|-----|-----|-----|-----|-----|-----|-----|-----|
| SIGNALS | Vcc | D | U | TH | TR | TL | R | L | GND |

PORT 4a

| PIN No. | 1 | 2 | ... | 8 | 9 |
|---------|-----|-----|-----|-----|-----|
| SIGNALS | Vcc | D | ... | L | GND |

PORT 4b

I / O INTERFACE

37

411

4aS

4aP

5a

4bS

4bP

5b

**FIG.5A**

4aP(4bP)

| | |
|---|---|
| 1 | Vcc |
| 2 | D |
| 3 | U |
| 4 | TH |
| 5 | TR |
| 6 | TL |
| 7 | R |
| 8 | L |
| 9 | GND |

**FIG.5B**

4aP(4bP)

| | |
|---|---|
| 1 | Vcc |
| 2 | D |
| 3 | U |
| 4 | TH |
| 5 | TR |
| 6 | TL |
| 7 | R |
| 8 | L |
| 9 | GND |

**FIG.5C**

4aP(4bP)

| | |
|---|---|
| 1 | Vcc |
| 2 | D |
| 3 | U |
| 4 | TH |
| 5 | TR |
| 6 | TL |
| 7 | R |
| 8 | L |
| 9 | GND |

**FIG.6A**

**FIG.6B**

**FIG.6C**

**FIG.6D**

START

TH-1,TR-1 — S101

READ R,L,U,D — S102

TH-0,TR-1 — S103

READ R,L,U,D — S104

CALCULATE ID-1 — S105

NO — S106
ID-1=H'B — YES → CONTROL PAD ACCESS SUBROUTINE — S111

NO — S107
ID-1=H'5 — YES → CONTROLLER ACCESS SUBROUTINE — S112

NO — S108
ID-1=H'7 — YES → ADAPTER ACCESS SUBROUTINE — S113

NO — S109
ID-1=H'3 — YES → MOUSE ACCESS SUBROUTINE — S114

NO — S110
ID-1=H'D — YES → 3/6 BUTTON ACCESS SUBROUTINE — S115

NO

ID = F : NOT CONNECTED — S116

END

# FIG.7

FIG.8

THREE-WIRE
HANDSHAKE-TYPE
ACCESS SUBROUTINE
START

READ ID-2 — S301

READ DATA SIZE — S302

READ DATA — S303

COMPLETION
OF DATA READ
? — S304

NO

YES

END

# FIG.9

FIG.10

CLOCKED SERIAL-TYPE
ACCESS SUBROUTINE
START

READ ID-2 — S501

READ DATA SIZE — S502

READ DATA — S503

COMPLETION
OF DATA READ? — S504    NO

YES

END

# FIG.11

**FIG.12**

**FIG.13**

EP 0 716 392 B1

TH

TR

U

→ t

# FIG.14